(19) **Europäisches Patentamt**
**European Patent Office**
**Office européen des brevets**

(11) **EP 2 533 172 B2**

(12) ## NEUE EUROPÄISCHE PATENTSCHRIFT
Nach dem Einspruchsverfahren

(45) Veröffentlichungstag und Bekanntmachung des Hinweises auf die Entscheidung über den Einspruch:
**12.01.2022 Patentblatt 2022/02**

(45) Hinweis auf die Patenterteilung:
**01.05.2019 Patentblatt 2019/18**

(21) Anmeldenummer: **12170772.3**

(22) Anmeldetag: **05.06.2012**

(51) Int Cl.:
*G06F 21/42* (2013.01)          *G06Q 20/32* (2012.01)
*G06Q 20/36* (2012.01)          *G06Q 20/38* (2012.01)
*G07F 7/10* (2006.01)           *H04L 29/06* (2006.01)
*H04W 12/04* (2021.01)

(54) **Gesicherter Zugriff auf Daten in einem Gerät**

Secure access to data in a device

Accès sécurisé aux données d'un appareil

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2011 DE 102011050863**
**01.07.2011 DE 102011051498**

(43) Veröffentlichungstag der Anmeldung:
**12.12.2012 Patentblatt 2012/50**

(73) Patentinhaber: **Kobil Systems GmbH**
**67547 Worms (DE)**

(72) Erfinder:
• **Koyun, Ismet**
**67550 Worms (DE)**
• **Madlener, Felix**
**67549 Worms (DE)**

• **Laue, Ralf**
**63263 Neu-Isenburg (DE)**

(74) Vertreter: **Habermann, Hruschka & Schnabel**
**Patentanwälte**
**Montgelasstraße 2**
**81679 München (DE)**

(56) Entgegenhaltungen:
**WO-A1-2004/070587      WO-A2-01/06699**
**US-A1- 2002 023 215      US-A1- 2007 297 610**
**US-A1- 2009 300 356      US-A1- 2010 266 132**

• **"Cryptographic Token Key Initialization Protocol (CT-KIP) Version 1.0 Revision 1; rfc4758.txt", , November 2006 (2006-11), Retrieved from the Internet: URL:https://tools.ietf.orq/html/rfc4758**

EP 2 533 172 B2

**Beschreibung**

**Gebiet der Erfindung**

Die Erfindung betrifft den gesicherten Zugriff auf Daten in einem Gerät, insbesondere auf schützenswerte Daten wie beispielsweise eine Software zur Durchführung einer Kommunikation und/oder einen geheimen Schlüssel eines asymmetrischen Schlüsselpaares, der zur Authentisierung, Signierung und/oder zur verschlüsselten Kommunikation verwendet werden soll.

**Hintergrund der Erfindung**

Heutzutage wird eine Vielzahl von sicherheitsrelevanten Diensten über das Internet durchgeführt. So ist es beispielsweise bekannt, Bankgeschäfte oder Zahlungen über das Internet durchzuführen. Online Anwendungen, wie das Online Banking oder das Online Payment, stellen jedoch ein Ziel für Hacker dar, die die sicherheitsrelevanten Daten eines Benutzers auskundschaften und in dessen Namen mit diesen Daten Online Transaktionen durchführen wollen. Beispielsweise werden die Authentisierungsdaten des Anwenders mittels verschiedener Techniken, wie Phishing- oder Trojaner- Techniken, entwendet und anschließend zur Zahlung verwendet.

Die WO 2004/070587 A1 betrifft das Steuern der Entschlüsselung eines verschlüsselten Anwendungsprogramms. Dabei hat ein Anbieter des Anwendungsprogramms die Möglichkeit, die Entschlüsselung der Anwendung zu steuern. Die entschlüsselte Anwendung läuft auf einem Gerät in einer gesicherten Umgebung ab, so dass der Besitzer des Geräts nicht in der Lage ist, auf die Anwendung in einer Weise zuzugreifen, die ihm erlauben würde, die Anwendung zu kopieren oder zu manipulieren.

Die WO 01/06699 A2 offenbart ein Clientgerät, auf dem eine verschlüsselte persönliche Sicherheitseinrichtung hinterlegt ist. Das Clientgerät überträgt Authentifikationsinformation an einen Authentifikationsserver. Als Reaktion auf die Authentifikationsinformation können ausgehend von einer Schlüsseldatenbank Entschlüsselungsinformationen für die verschlüsselte Sicherheitseinrichtung zu dem Clientgerät gesendet werden.

Die US 2009/300356 A1 betrifft ein Verschlüsselungssystem für die entfernte Datenspeicherung. Das Verschlüsselungssystem umfasst einen Schlüsselserver. Ein von dem Schlüsselserver entfernter Nutzer kann von dem Schlüsselserver einen Schlüssel anfordern. Zu diesem Zweck wird ein Zugriffsberechtigungsnachweis übertragen. Der Zugriffsberechtigungsnachweis wird durch Vergleich mit einer zuvor gespeicherten Version des Zugriffsberechtigungsnachweises validiert. Daraufhin wird ein mit dem Zugriffsberechtigungsnachweis assoziierter Schlüssel anhand einer in einem Schlüsselverwaltungsmodul des Schlüsselservers gespeicherten Schlüsselzugriffstabelle ausgewählt. Der ausgewählte Schlüssel kann dann an den Nutzer gesendet werden.

Die US 2007/297610 A1 betrifft ein netzwerkbasiertes Datensicherheitsverfahren für ein mobiles Gerät. Auf dem mobilen Gerät sind verschlüsselte Daten gespeichert. Bei Bedarf fordert das mobile Gerät einen Schlüssel von einem Schlüsselserver an. Nach einer Authentifizierung des Nutzers des mobilen Geräts überträgt der Schlüsselserver den Schlüssel zu dem mobilen Gerät. Der Schlüssel kann zum Entschlüsseln der verschlüsselten Daten verwendet werden.

**Zusammenfassung einiger beispielhafter Ausführungsformen der vorliegenden Erfindung**

Selbst wenn die Authentisierungsdaten (beispielsweise ein geheimer Schlüssel) des Benutzers eines elektronischen Geräts in dem Gerät durch ein Passwort geschützt sind, das der Benutzer eingeben muss, wenn er diese Daten zur Authentisierung verwenden will, ist durch Schadsoftware und/oder bei Erlangung der Kontrolle über das Gerät kriminellen Personen der Zugriff auf diese Authentisierungsdaten und damit deren Missbrauch möglich.

Es ist u.a. eine Aufgabe der vorliegenden Erfindung, eine besonders sichere Kommunikation eines elektronischen Geräts zu ermöglichen.

Diese Aufgabe wird gelöst durch ein Verfahren, ausgeführt an einem elektronischen Gerät, gemäß Patentanspruch 1 und durch ein Verfahren, ausgeführt an einem Server, gemäß Patentanspruch 11. Des Weiteren wird die der Erfindung zugrunde liegende Aufgabe gelöst durch ein Computerprogramm gemäß Patentanspruch 13, ein Computerprogrammentwicklungsset gemäß Patentanspruch 14 und eine Vorrichtung gemäß Patentanspruch 15. Vorteilhafte Ausgestaltungen sind den abhängigen Patentansprüchen zu entnehmen.

Das erfindungsgemäße Verfahren, ausgeführt an einem elektronischen Gerät, umfasst das Einrichten einer Verbindung mit einem Server; das Authentisieren des Benutzers des elektronischen Geräts und/oder des elektronischen Geräts gegenüber dem Server; und das Erhalten eines ersten Schlüssels von dem Server bei erfolgreicher Authentisierung, wobei der erste Schlüssel zur Entschlüsselung von auf dem elektronischen Gerät gespeicherten verschlüsselten Daten dient und die entschlüsselten Daten für eine Kommunikation des elektronischen Geräts bestimmt (z.B. erforderlich, beispielsweise für eine Authentisierung im Rahmen der Kommunikation) sind, oder der erste Schlüssel zusammen mit auf dem elektronischen Gerät gespeicherten Daten für die Kommunikation des elektronischen Geräts bestimmt ist. Dabei umfassen die entschlüsselten Daten zumindest einen Teil eines zweiten Schlüssels zum Authentisieren des elektronischen Geräts und/oder des Benutzers des elektronischen Geräts und/oder zum Verschlüsseln der Kommunikation des elektronischen Geräts und/oder zum Signieren von Nachrichten des elektronischen Geräts. Das Verfahren umfasst ferner die Erzeugung des zweiten Schlüssels an dem elektronischen Gerät in einer Initialisierungsphase.

Das erfindungsgemäße Verfahren, ausgeführt an einem Server, umfasst das Einrichten einer Verbindung mit einem elektronischen Gerät; das Authentifizieren des Benutzers des elektronischen Geräts oder des elektronischen Geräts; und die Ausgabe eines ersten Schlüssels bei erfolgreicher Authentifizierung, wobei der erste Schlüssel zur Entschlüsselung von auf dem elektronischen Gerät gespeicherten verschlüsselten Daten dient und die entschlüsselten Daten für eine Kommunikation des elektronischen Geräts bestimmt sind, oder der erste Schlüssel zusammen mit auf dem elektronischen Gerät gespeicherten Daten für die Kommunikation des elektronischen Geräts bestimmt ist. Dabei umfassen die entschlüsselten Daten zumindest einen Teil eines zweiten Schlüssels zum Authentisieren des elektronischen Geräts und/oder des Benutzers des elektronischen Geräts und/oder zum Verschlüsseln der Kommunikation des elektronischen Geräts und/oder zum Signieren von Nachrichten des elektronischen Geräts. Ferner wurde der zweite Schlüssels in einer Initialisierungsphase an dem elektronischen Gerät erzeugt.

Das erfindungsgemäße Computerprogramm (im folgenden auch als erfindungsgemäße Software bezeichnet) umfasst Programmanweisungen, die einen Prozessor zur Ausführung und/oder Steuerung der Schritte zumindest eines der erfindungsgemäßen Verfahren veranlassen, wenn das Computerprogramm auf dem Prozessor läuft. Dabei kann der Prozessor beispielsweise ein Teil des elektronischen Geräts oder des Servers sein, an dem das entsprechende erfindungsgemäße Verfahren ausgeführt wird. Ein Computerprogramm kann zumindest teilweise Software und/oder Firmware eines Prozessors sein.

Das erfindungsgemäße Computerprogrammentwicklungsset umfasst Computerprogrammbausteine zur Schaffung des erfindungsgemäßen Computerprogramms.

Auf der erfindungsgemäßen Datenträgervorrichtung ist ein erfindungsgemäßes Computerprogramm oder ein erfindungsgemäßes Computerprogrammentwicklungsset gespeichert. Die erfindungsgemäße Datenträgervorrichtung kann beispielsweise ein computerlesbares Speichermedium sein, welches ein erfindungsgemäßes Computerprogramm und/oder ein erfindungsgemäßes Computerprogrammentwicklungsset enthält und z.B. als magnetisches, elektrisches, elektro-magnetisches, optisches und/oder andersartiges Speichermedium ausgebildet ist.

Die erfindungsgemäße Vorrichtung umfasst Mittel zur Ausführung zumindest eines der erfindungsgemäßen Verfahren. Die erfindungsgemäße Vorrichtung ist beispielsweise das elektronische Gerät, an dem das entsprechende erfindungsgemäße Verfahren ausgeführt wird, oder der Server, an dem das entsprechende erfindungsgemäße Verfahren ausgeführt wird. Die Mittel können beispielsweise einen Prozessor umfassen.

Das erfindungsgemäße System umfasst ein elektronisches Gerät umfassend Mittel zur Ausführung des entsprechenden erfindungsgemäßen Verfahrens und den Server.

Im Folgenden werden beispielhafte Ausgestaltungen der vorliegenden Erfindung beschrieben, welche auf weitere beispielhafte Merkmale der erfindungsgemäßen Verfahren, des erfindungsgemäßen Computerprogramms, des erfindungsgemäßen Computerprogrammentwicklungssets, der erfindungsgemäßen Datenträgervorrichtung, der erfindungsgemäßen Vorrichtung und des erfindungsgemäßen Systems abstellen. Insbesondere sollen durch die Beschreibung eines zusätzlichen Verfahrenschritts der erfindungsgemäßen Verfahren auch als offenbart gelten Mittel zur Durchführung des Verfahrenschritts der entsprechenden erfindungsgemäßen Vorrichtung, ein entsprechender Computerprogrammbaustein des erfindungsgemäßen Computerprogrammentwicklungssets und eine entsprechende Programmanweisung des entsprechenden erfindungsgemäßen Computerprogramms, die einen Prozessor zur Ausführung des Verfahrensschritts veranlasst, wenn das Computerprogramm durch den Prozessor ausgeführt wird. Das Gleiche soll auch für die Offenbarung eines Mittels zur Durchführung eines Verfahrensschritts oder einer Programmanweisung gelten, z.B. soll die Offenbarung eines Mittels zur Durchführung eines Verfahrensschritts auch als Offenbarung des entsprechenden Verfahrensschritts und einer entsprechenden Programmanweisung verstanden werden.

Ein elektronisches Gerät ist beispielsweise eine Vorrichtung, die zur Verarbeitung von Daten mit Hilfe eines Prozessors eingerichtet ist, z.B. eine Datenverarbeitungseinrichtung wie ein Computer, ein Thin-Client, ein Server, ein tragbarer Computer, ein persönlicher digitaler Assistent, ein Mobiltelefon und/oder jedes andere elektronisches Gerät, das einen Prozessor aufweist. Unter Prozessor sollen unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden.

Zum Beispiel könnte ein erfindungsgemäßes Computerprogramm von einem Prozessor eines elektronischen Geräts ausgeführt werden und das elektronische Gerät veranlassen, das entsprechende erfindungsgemäße Verfahren an dem elektronischen Gerät auszuführen.

Die Verbindung zwischen dem elektronischen Gerät und dem Server ist beispielsweise eine drahtgebundene und/oder eine drahtlose Datenverbindung. Zum Beispiel ist die Verbindung zumindest teilweise eine Netzwerk-Datenverbindung (z.B. eine Ethernet-, Fast-Ethernet-, Gigabit-Ethernet-, DSL (Digital Subscriber Line)- und/oder eine WLAN-Datenverbindung) und/oder zumindest teilweise eine Mobilfunk-Datenverbindung (z.B. eine GSM (Global System for Mobile Communications)-, UMTS (Universal Mobile Telecommunications System)-, GPRS (General Packet Radio Service)-, HSDPA (High Speed Downlink Packet Access)-, HSUPA (High Speed Uplink Packet Access)- und/oder eine LTE (Long Term Evolution)-Datenverbindung). Zum Beispiel erfolgt die Datenverbindung über ein lokales Netzwerk (LAN), ein regionales Netzwerk (WAN) und/oder das Internet. Zum Beispiel umfasst das elektronische Gerät zumindest eine Datenschnittstelle zum Einrichten einer Datenverbindung mit dem Server und/oder der Server umfasst zumindest eine Datenschnittstelle zum Einrichten einer Datenverbindung mit dem elektronischen Gerät.

Nur dann, wenn der Server den Benutzer (und/oder das elektronische Gerät) erfolgreich authentifiziert, wird an dem Server der erste Schlüssel ausgegeben, z.B. über die Verbindung an das elektronische Gerät gesendet. Nur dann, wenn sich der Benutzer (und/oder das elektronische Gerät) erfolgreich gegenüber dem Server authentisiert, wird an dem elektronischen Gerät der erste Schlüssel erhalten, z.B. über die Verbindung mit dem Server empfangen.

Das Authentisieren des Benutzers des elektronischen Geräts (und/oder des elektronischen Geräts) gegenüber dem Server erfolgt beispielsweise durch die Ausgabe einer Benutzerauthentisierungsinformation von dem elektronischen Gerät an den Server, z.B. über die Verbindung mit dem Server gesendet. Die Authentifizierung des Benutzers (und/oder des elektronischen Geräts) an dem Server erfolgt beispielsweise durch die Überprüfung einer an dem Server von dem elektronischen Gerät erhaltenen Benutzerauthentisierungsinformation, z.B. empfangen über die Verbindung mit dem elektronischen Gerät.

Eine Benutzerauthentisierungsinformation ist zum Beispiel ein Passwort, eine digitale Signatur und/oder ein Softwarezertifikat, wie z.B. ein RSA (Rivest Shamir Adleman)-Zertifikat. Die Benutzerauthentisierungsinformation wird beispielsweise durch eine Benutzereingabe und/oder durch eine mit dem elektronischen Gerät verbundene Benutzerauthentisierungsvorrichtung an dem elektronischen Gerät erhalten. Die Authentisierung des Benutzers (und/oder der elektronischen Geräts) erfolgt beispielsweise in Form einer sogenannten 2-Faktor-Authentisierung. Die Benutzerauthentisierungsinformation kann auch biometrische Information des Benutzers enthalten oder aus dieser bestehen. Beispielsweise kann ein Fingerabdruck, eine Sprachprobe oder einer Irisscan als Benutzerauthentisierungsinformation dienen.

Die Benutzerauthentisierungsinformation wird vorzugsweise nicht (oder zumindest nicht dauerhaft) in dem elektronischen Gerät gespeichert, da ihre Prüfung ausschließlich am Server erfolgt.

Die Benutzerauthentisierungsinformation ist z.B. benutzerbezogen und dient zur Authentifizierung eines bestimmten Benutzers oder einer Gruppe von Benutzern durch den Server. Zum Beispiel wird während einer für jeden Benutzer einmalig durchzuführenden Initialisierungsphase die jeweilige individuelle (z.B. für jeden Benutzer unterschiedliche) Benutzerauthentisierungsinformation des Benutzers an dem Server festgelegt. In der Initialisierungsphase authentisiert sich der Benutzer beispielsweise mit einem Einmal-Aktivierungs-Passwort gegenüber dem Server. Zum Beispiel erhält der Benutzer das Einmal-Aktivierungspasswort über einen separaten Kanal, zum Beispiel per Post.

Durch eine Überprüfung der von dem elektronischen Gerät an den Server ausgegebenen Benutzerauthentisierungsinformation mit der in der Initialisierungsphase festgelegten Benutzerauthentisierungsinformation kann der Benutzer (und/oder das elektronische Gerät) an dem Server beispielsweise authentifiziert werden. Die erfolglosen Authentisierungsversuche eines Benutzers des elektronischen Geräts (und/oder der elektronischen Geräts) gegenüber dem Server können beispielsweise an dem Server gezählt werden. Zum Beispiel kann bei einer Überschreitung einer bestimmten Anzahl von erfolglosen Authentisierungsversuchen eines Benutzers (und/oder des elektronischen Geräts) der Benutzer (und/oder das Gerät) durch den Server gesperrt werden. Dadurch wird beispielsweise eine erfolgreiche Authentisierung eines Angreifers gegenüber dem Server durch simples Ausprobieren (sog. Brute-Force-Methode) verhindert.

Zur Authentisierung des Benutzers und/oder des elektronischen Geräts können zusätzlich zu der Benutzerauthentisierungsinformation (beispielsweise einer PIN) auch weitere Informationen dem Server zur Verfügung gestellt (und von diesem empfangen und geprüft) werden, beispielsweise Informationen zu einem Programm, das der Benutzer zur Authentisierung gegenüber dem Server verwendet (dieses Programm kann beispielsweise das erfindungsgemäße Programm oder ein Teil davon sein). Die Informationen können beispielsweise eine Identifizierung (beispielsweise in Form einer einzigartigen Identifikationsnummer) des Programms und/oder einen Zustand des Programms betreffen. Der Server kann beispielsweise anhand dieser Information prüfen, ob das Programm für das elektronische Gerät (und nicht für ein anderes elektronisches Gerät) registriert ist (beispielsweise am Server), ob das Programm noch im Originalzustand (oder in einem Zustand, der sich aus dem Originalzustand lediglich durch offizielle Updates ergibt) ist und/oder ob die Version des Programms korrekt ist oder ein Update erforderlich ist. Die Authentisierung des Benutzers bzw. des elektronischen Geräts kann dann beispielsweise nur dann als erfolgreich angesehen und der erste Schlüssel ausgegeben werden, wenn festgestellt wird, dass die Benutzerauthentisierungsinformation korrekt ist, das Programm für das elektronische Gerät registriert ist, das Programm im Originalzustand (gfs. inkl. offizieller Updates) ist und/oder eine korrekte Version aufweist.

Der erste Schlüssel ist beispielsweise ein für jeden Benutzer (und/oder das elektronische Gerät) individueller Schlüssel. Der erste Schlüssel wird zum Beispiel in der für jeden Benutzer (und/oder jedes elektronische Gerät) einmalig durchzuführenden Initialisierungsphase festgelegt und nur in dem Server dauerhaft gespeichert. Der erste Schlüssel ist vorzugsweise nicht dauerhaft in dem elektronischen Gerät gespeichert und wird nach jeder Ausführung des erfindungsgemäßen Verfahrens an dem elektronischen Gerät in dem elektronischen Gerät gelöscht. Zum Beispiel hat der Schlüssel eine Länge von 128 Bit, 192 Bit oder 256 Bit. Dies ist unter anderem vorteilhaft, um einem Benutzer die Verwendung eines einfachen Passworts zur Authentisierung gegenüber dem Server zu ermöglichen und die Kommunikation des elektronischen Geräts trotzdem mit einem sichereren Passwort zu schützen.

Die Kommunikation, für die die entschlüsselten Daten bestimmt sind, ist beispielsweise eine bestimmte (z.B. vordefinierte) Kommunikation (z.B. eine bestimme (z.B. vordefinierte) Art der Kommunikation), und/oder eine Kommunikation mit einem oder mehreren bestimmten (z.B. vordefinierten) Kommunikationspartnern (z.B. Servern).

Bei der Kommunikation handelt es sich beispielsweise nicht um die einzige Kommunikation, die das elektronische Gerät ausführen kann. Es kann also auch andere Kommunikation ohne den in den verschlüsselten Daten enthaltenen Teil der Software möglich sein und/oder gesteuert werden.

Bei der Kommunikation handelt es sich beispielsweise um eine Kommunikation, die eine Authentisierung des elektronischen Geräts und/oder eine Authentisierung eines Benutzers des elektronischen Geräts (und/oder des elektronischen Geräts) erfordert. Die entschlüsselten Daten können dann beispielsweise zumindest einen Teil von zu dieser Authentisierung erforderlicher Information (beispielsweise den zweiten Schlüssel) enthalten oder für die Nutzung (beispielsweise den Zugriff auf) zumindest eines Teils derartiger Information erforderlich sein. Die Authentisierung kann beispielsweise eine Authentisierung (beispielsweise eine clientseitige Authentisierung, die u.a. eine Signierung von Daten (beispielsweise einer vom Server an den Client gesendeten Challenge) mit einem geheimen Schlüssel des Clients erfordert) im Rahmen einer sicheren Verbindung, beispielsweise eine Secure Socket Layer (SSL) / Transport Layer Security (TLS) Verbindung gemäß Request for Comments (RFC) Dokument 5246 oder einer sicheren Verbindung nach einem proprietären Protokoll sein. Die Authentisierung kann zusätzlich oder alternativ beispielsweise die Signierung einer Nachricht (beispielsweise durch Verschlüsselung eines Hashwerts über die Nachricht) umfassen, beispielsweise mit dem zweiten Schlüssel. Die Nachricht kann beispielsweise eine Bestätigung eines Anmelde- und/oder Transaktionsvorgangs sein, die der Benutzer an einem Server eines Dienstanbieters (der beispielsweise von dem Server, von dem der erste Schlüssel erhalten wird, verschieden ist oder der gleiche ist) vornimmt, zu dem dem Benutzer am elektronischen Gerät Informationen angezeigt werden und die dieser bestätigen oder ablehnen kann. Die signierte Nachricht wird dann beispielsweise an den Server übermittelt und dort beispielsweise verifiziert und/oder archiviert.

Zum Beispiel kann das elektronische Gerät nur mit Hilfe des ersten Schlüssels die Kommunikation, beispielsweise eine Online-Banking-Kommunikation, durchführen. Dies ist unter anderem vorteilhaft, da ein Angreifer, selbst wenn er in Besitz des elektronischen Geräts ist, sich erfolgreich gegenüber dem Server authentisieren muss, um die Kommunikation des elektronischen Geräts verwenden zu können.

Die Kommunikation ist beispielsweise eine gesicherte Kommunikation mit einem Server, zum Beispiel mit einem Server eines Online-Banking-Kommunikationsdienstes. Dieser Server kann mit dem Server, von dem der erste Schlüssel bezogen wird, übereinstimmen oder ein anderer Server sein. Die gesicherte Kommunikation dient beispielsweise zum Austausch von Online-Banking-Transaktionsinformationen und/oder Transaktionsnummern (TANs) zur Bestätigung von Online-Banking-Transaktionen über einen sicheren Kanal, oder zur Bestätigung oder Ablehnung von Anmelde- und/oder Transaktionsvorgängen, die von dem Benutzer des elektronischen Geräts an einem Server eines Dienstanbieters vorgenommen werden, über einen sicheren Kanal, insbesondere über einen sicheren Kanal, der separat von dem Kanal ist, über den der Benutzer des elektronischen Geräts an dem Server des Dienstanbieters die Anmelde- und/oder Transaktionsvorgänge vornimmt.

Zum Beispiel dient der erste Schlüssel zur Entschlüsselung von auf dem elektronischen Gerät gespeicherten verschlüsselten Daten, wobei die entschlüsselten Daten für die Kommunikation des elektronischen Geräts bestimmt sind. Die Daten sind beispielsweise mit dem ersten Schlüssel verschlüsselt, z.B. asymmetrisch oder symmetrisch. Zum Beispiel sind die Daten mit einem Advanced Encryption Standard (AES)-Verschlüsselungsverfahren verschlüsselt. Der erste Schlüssel ist beispielsweise ein AES-Schlüssel.

Zum Beispiel umfassen die entschlüsselten Daten zumindest einen Teil (oder auch alle Bestandteile) einer Software (beispielsweise eine Applikation, die auf das elektronische Gerät heruntergeladen wurde), die eine Kommunikation des elektronischen Geräts (beispielsweise mit einem Online-Banking-Server) zumindest teilweise ermöglicht und/oder zumindest teilweise steuert. Der ausführbare Programmcode der Software kann dann beispielsweise verschlüsselt in einem Speicher (beispielsweise einem Programmspeicher wie z.B. einem Flash-Speicher) des elektronischen Geräts abgelegt sein und erst nach Entschlüsselung ausführbar sein. Er kann zur Ausführung (in entschlüsselter Form) dann beispielsweise in einen anderen Speicher des elektronischen Geräts oder in einen anderen Speicherbereich des gleichen Speichers, in dem er verschlüsselt abgelegt war, kopiert werden. Der ausführbare Programmcode kann zu Ausführung beispielsweise in einen flüchtigen Speicher, beispielsweise einen RAM-Speicher (beispielsweise den Arbeitsspeicher) entschlüsselt werden. Nach seiner Ausführung kann er dann beispielsweise wieder aus dem flüchtigen Speicher gelöscht oder überschrieben werden. Dadurch kann vorteilhaft vermieden werden, dass der entschlüsselte Programmcode dauerhaft in entschlüsselter Form vorliegt.

Zusätzlich oder alternativ zu dem Teil der Software enthalten die entschlüsselten Daten zumindest einen zweiten Schlüssel (oder einen Teil davon), mit dem (oder auf dessen Grundlage) sich der Benutzer (und/oder das elektronische Gerät) beispielsweise gegenüber einem Kommunikationsdienst, z.B. einem Online-Banking-Kommunikationsdienst, oder einem Server, beispielsweise dem Server, von dem der erste Schlüssel bezogen wird, authentisieren kann. Der zweite Schlüssel kann beispielsweise zur clientseitigen Authentisierung beim Aufbau einer sicheren Verbindung (beispielsweise einer SSL- oder TLS-Verbindung) zu einem Server (beispielsweise dem Server, von dem der erste Schlüssel bezogen wird) und/oder zur Signierung von Nachrichten (beispielsweise Bestätigungen von Anmelde- und/oder Transaktionsvorgängen) verwendet werden. Bei der clientseitigen Authentisierung kann das elektronische Gerät beispielsweise eine vom Server gestellte Challenge signieren, die dann wiederum mit einem dem zweiten Schlüssel zugeordneten Schlüssel am Server geprüft werden kann (beispielsweise durch Entschlüsselung des in der Signatur enthaltenen Hashwerts der Challenge, Neuberechnung des Hashwerts der Challenge am Server und Vergleich der Hashwerte).

Zusätzlich oder alternativ zu dem Teil der Software können die entschlüsselten Daten auch lediglich einen Teil eines zweiten Schlüssels enthalten, der nur zusammen mit einem weiteren Teil des zweiten Schlüssels (der beispielsweise in dem Server gespeichert ist, beispielsweise in verschlüsselter od. unverschlüsselter Form), zur Authentisierung verwendet werden kann. Die beiden Teile können beispielsweise einen verteilten Schlüssel, beispielsweise einen verteilten privaten RSA-Schlüssel, darstellen.

Wenn die entschlüsselten Daten zumindest einen Teil der Software, die eine Kommunikation des elektronischen Geräts zumindest teilweise ermöglicht und/oder zumindest teilweise steuert, und den zweiten Schlüssel (oder einen Teil davon) umfassen, kann der zweite Schlüssel (oder der Teil davon) beispielsweise in dem Teil der Software enthalten und/oder mit diesem Teil der Software verbunden sein. In ersterem Fall wird der zweite Schlüssel (oder der Teil davon) dann beispielsweise durch die Verschlüsselung des Teils der Software verschlüsselt, in letzterem Fall wird der zweite Schlüssel (oder der Teil davon) beispielsweise zusammen mit dem Teil der Software oder separat davon verschlüsselt. Der zweite Schlüssel (oder der Teil davon) kann dann beispielsweise zur zumindest teilweisen Authentisierung im Rahmen der Kommunikation, die durch den Teil der Software zumindest teilweise ermöglicht und/oder zumindest teilweise gesteuert wird, dienen.

Der zweite Schlüssel ist beispielsweise ein geheimer Schlüssel eines asymmetrischen Schlüsselpaares, der zur Authentisierung des Benutzers und/oder das elektronische Gerät (beispielsweise bei dem Kommunikationsdienst, z.B. einem Server des Kommunikationsdienstes, oder bei einem Server, beispielsweise dem Server, bei dem der erste Schlüssel bezogen wird) dient. Ein Beispiel für asymmetrische Verschlüsselungsverfahren ist das Rivest-Shamir-Adleman (RSA) Verfahren. Zum Beispiel ist der zweite Schlüssel ein RSA-Schlüssel.

Der zweite Schlüssel kann beispielsweise in einem ersten Speicher des elektronischen Geräts gespeichert werden, während andere geheime Schlüssel des elektronischen Geräts in einem zweiten Speicher gespeichert werden. Der zweite und der erste Speicher können beispielsweise unterschiedliche Speicher sein. Der zweite Speicher kann beispielsweise bereits bei Auslieferung des elektronischen Geräts vorhanden sein, während der erste Speicher beispielsweise erst bei Installation einer Software, mit der die Authentisierung am Server durchgeführt wird (beispielsweise das erfindungsgemäße Computerprogramm) auf dem elektronischen Gerät angelegt oder reserviert wird. Der erste Speicher wird beispielsweise vollständig mit dem ersten Schlüssel verschlüsselt und ist nur mit diesem entschlüsselbar.

Die entschlüsselten Daten können beispielsweise zumindest einen Teil einer Software und/oder Information enthalten, die zum Erhalten von in dem Server gespeicherter Authentisierungsinformation (wie beispielsweise einem Schlüssel oder eines Teils davon, beispielsweise dem schon beschriebenen zweiten Schlüssel, oder aus diesem Schlüssel abgeleitete Information) erforderlich ist. Die Authentisierungsinformation kann beispielweise zur zumindest teilweisen Authentisierung des elektronischen Geräts und/oder eines Benutzers des elektronischen Geräts in der Kommunikation des elektronischen Geräts dienen. Die Authentisierungsinformation (beispielsweise ein geheimer Schlüssel oder ein Teil davon) kann beispielsweise verschlüsselt im Server abgelegt sein und die in den entschlüsselten Daten enthaltene Information kann dann beispielsweise einen Schlüssel zur Entschlüsselung dieser Authentisierungsinformation sein. Wenn die Authentisierungsinformation ein Teil eines geheimen Schlüssels ist, kann der andere Teil beispielsweise in dem Gerät gespeichert sein, er kann beispielsweise Teil der entschlüsselten Daten sein.

Die entschlüsselten Daten können beispielsweise zumindest einen Teil einer Software und/oder Information enthalten, die zur Nutzung von Authentisierungsinformation, auf die eine mit dem elektronischen Gerät (drahtlos oder drahtgebunden) verbindbare Vorrichtung (beispielsweise ein Smartcard-Lesegerät oder ein Speichermedium) zugreifen kann, erforderlich ist.

Die Authentisierungsinformation (wie beispielsweise ein Schlüssel oder ein Teil davon, beispielsweise der schon beschriebene zweite Schlüssel oder ein Teil davon, oder aus diesem Schlüssel abgeleitete Information) kann beispielweise zur Authentisierung des elektronischen Geräts und/oder eines Benutzers des elektronischen Geräts in der Kommunikation des elektronischen Geräts dienen. Die Authentisierungsinformation kann beispielsweise aus der Vorrichtung nicht auslesbar sein. Die Nutzung der Authentisierungsinformation kann beispielsweise darin bestehen, dass Operationen mit Daten (beispielsweise eine Signierung oder Verschlüsselung) unter Verwendung der Authentisierungsinformation ausgelöst und die Ergebnisse erhalten werden können.

Die in den (mit dem ersten Schlüssel) entschlüsselten Daten enthaltene Information kann dann beispielsweise eine Information (z.B. ein Passwort od. eine PIN der Vorrichtung oder eines Mediums, auf das die Vorrichtung zugreifen kann) sein, die zur Nutzung der Authentisierungsinformation erforderlich ist.

Die Information kann beispielsweise von einem Benutzer des elektronischen Geräts (beispielsweise einmalig) eingegeben und dann (ggfs. mit weiteren Daten) mit dem ersten Schlüssel verschlüsselt worden sein, um die verschlüsselten Daten zu erhalten.

Die in den (mit dem ersten Schlüssel) entschlüsselten Daten enthaltene Information kann beispielsweise ein Schlüssel sein, mit dem eine auf dem Server gespeicherte Information (z.B. ein Passwort od. eine PIN der Vorrichtung oder eines Mediums, auf das die Vorrichtung zugreifen kann, oder ein Teil des Passworts/PIN), die zur Nutzung der Authentisierungsinformation erforderlich ist, verschlüsselt ist. Beispielsweise kann der Server eine PIN in verschlüsselter Form speichern, wobei der Schlüssel zur Entschlüsselung der PIN in den (mit dem ersten Schlüssel) entschlüsselten Daten enthalten ist und die PIN zur Nutzung der Authentisierungsinformation der Vorrichtung erforderlich ist (beispielsweise weil es sich um die PIN einer Smartcard handelt, auf die die Vorrichtung bei Vorliegen der PIN zugreifen kann). Der Server kann auch nur einen Teil dieser PIN in verschlüsselter Form speichern, wobei der andere Teil dann beispielsweise an dem elektronischen Gerät oder der Vorrichtung (beispielsweise unverschlüsselt) eingegeben werden muss.

Wenn die entschlüsselten Daten zumindest einen Teil einer Software enthalten, die zur Nutzung von Authentisierungsinformation, auf die eine mit dem elektronischen Gerät verbindbare Vorrichtung zugreifen kann, erforderlich ist, kann die Software beispielsweise Information enthalten, die zur Authentisierung gegenüber der Vorrichtung erforderlich sind. Diese Information kann beispielsweise von einer mit der Authentisierungsinformation, auf die die Vorrichtung zugreifen kann, verbundenen PIN (beispielsweise einer Smartcard-PIN) unterschiedlich sein und beispielsweise nur für die Vorrichtung (beispielsweise einen Smartcard-Lesegerät) spezifisch sein.

Zum Beispiel ist der erste Schlüssel zusammen mit auf dem elektronischen Gerät gespeicherten Daten für die Kommunikation des elektronischen Geräts bestimmt. Zum Beispiel bildet der erste Schlüssel zusammen mit dem in dem elektronischen Gerät gespeicherten zweiten Schlüssel einen dritten Schlüssel mit dem sich der Benutzer (und/oder das elektronische Gerät) gegenüber einem Kommunikationsdienst, z.B. einem Online-Banking-Kommunikationsdienst, oder einem Server authentisieren kann. Der dritte Schlüssel ist beispielsweise ein geheimer Schlüssel eines asymmetrischen Schlüsselpaares, der zur Authentisierung des Benutzers (und/oder des elektronischen Geräts) bei dem Kommunikationsdienst (bzw. einem Server des Kommunikationsdienstes) dient. Zum Beispiel ist der dritte Schlüssel ein RSA-Schlüssel. Dadurch ist die Verwendung der Kommunikation nur möglich, wenn sowohl der in dem Server gespeicherte erste Schlüssel als auch der in dem elektronischen Gerät gespeicherte zweite Schlüssel bekannt sind.

Gemäß einem Ausführungsbeispiel der Erfindung umfasst das Authentisieren des Benutzers des elektronischen Geräts und/oder des elektronischen Geräts gegenüber dem Server das Erhalten einer Benutzerauthentisierungsinformation an dem elektronischen Gerät; und das Übermitteln der Benutzerauthentisierungsinformation an den Server.

Gemäß einem Ausführungsbeispiel der Erfindung wird die Benutzerauthentisierungsinformation von einer Benutzerauthentisierungsvorrichtung an dem elektronischen Gerät erhalten.

Die Benutzerauthentisierungsvorrichtung ist beispielsweise ein Kartenlesegerät, beispielsweise ein Kartenlesegerät der Sicherheitsklasse 1, 2, 3 oder 4 gemäß einer Spezifikation des Zentralen Kreditausschusses (ZKA). Vorzugsweise ein Kartenlesegerät der Sicherheitsklasse 3 oder 4. Zum Beispiel kann eine Smartcard derart eingerichtet sein, dass Sie die Benutzerauthentisierungsinformation nur dann zum Auslesen durch das Kartenlesegerät frei schaltet und an das mit dem Kartenlesegerät verbundene elektronische Gerät ausgibt, wenn der Benutzer ein der Benutzerauthentisierungsinformation zugeordnetes Passwort (z.B. an dem elektronischen Gerät oder an dem Kartenlesegerät) eingegeben hat (2-Faktor-Authentisierung), z.B. könnte die Benutzerauthentisierungsinformation verschlüsselt sein und mit dem Passwort durch Mittel der Smartcard (d.h. innerhalb der Smartcard) entschlüsselbar sein. Die Smartcard ist beispielsweise ein digitaler Personalausweis.

Die Benutzerauthentisierungsvorrichtung ist beispielsweise drahtlos oder drahtgebunden mit dem elektronischen Gerät verbunden, zum Beispiel über eine Bluetooth-Datenschnittstelle und/oder eine USB-Datenschnittstelle.

Gemäß einem Ausführungsbeispiel der Erfindung umfassen die erfindungsgemäßen Verfahren in einer Initialisierungsphase ferner das Registrieren des Benutzers (und/oder des elektronischen Geräts) und/oder der Benutzerauthentisierungsinformation an dem Server.

Gemäß einem Ausführungsbeispiel der Erfindung umfasst das erfindungsgemäße Verfahren, ausgeführt an dem elektronischen Gerät, das Entschlüsseln der in dem elektronischen Gerät gespeicherten verschlüsselten Daten mit dem ersten Schlüssel; und das Verwenden der entschlüsselten Daten für die Kommunikation.

Gemäß einem Ausführungsbeispiel der Erfindung umfasst das erfindungsgemäße Verfahren, ausgeführt an dem elektronischen Gerät, das Verschlüsseln der Daten mit dem ersten Schlüssel; und das Speichern der verschlüsselten Daten in dem elektronischen Gerät. Wenn der erste Schlüssel individuell für einen Benutzer des elektronischen Geräts (und/oder das elektronische Gerät) generiert wurde, wird durch die Verschlüsselung der Daten (beispielsweise einer Software zur Kommunikation des elektronischen Geräts und/oder des zweiten Schlüssels) automatisch auch eine Individualisierung der verschlüsselten Daten auf dem elektronischen Gerät bewirkt. Dadurch kann zum einen erreicht werden, dass die (kriminelle) Analyse der Verschlüsselung durch erschwert wird, da - selbst bei Annahme von gleichen Daten auf einer Vielzahl von elektronischen Geräten, wobei die Daten allerdings auf jedem elektronischen Gerät mit unterschiedlichen ersten Schlüsseln verschlüsselt sind - eine Vielzahl von elektronischen Geräten herangezogen werden müsste, und zum anderen erreicht werden, dass selbst bei (krimineller) Kenntniserlangung oder (krimineller) Berechnung des ersten Schlüssels eines elektronischen Geräts lediglich die Daten dieses elektronischen Geräts, aber nicht die Daten anderer elektronischer Geräte zugänglich/nutzbar sind.

Erfindungsgemäß umfassen die in dem elektronischen Gerät gespeicherten Daten zumindest einen zweiten Schlüssel zum Authentisieren des Benutzers des elektronischen Geräts und/oder des elektronischen Geräts (oder einen Teil des zweiten Schlüssels) und/oder zum Verschlüsseln der Kommunikation des elektronischen Geräts und/oder zum Signieren von Nachrichten des elektronischen Geräts. Die Authentisierung des Benutzers und/oder des Geräts kann beispielsweise beim Aufbau einer gesicherten Verbindung (beispielsweise einer SSL- oder TLS-Verbindung) zwischen dem Gerät und einem Server (beispielsweise einem Server eines Online-Dienstanbieters (z.B. für Online-Banking) oder dem Server, von dem der erste Schlüssel erhalten wird) erforderlich sein, beispielsweise zur clientseitigen Authentisierung. Beispielsweise wird der zweite Schlüssel zur Signierung einer vom Server erhaltenen Challenge (oder beispielsweise von Information, die von dem elektronischen Gerät und/oder dem Server erzeugt wird, wobei diese Information beispielsweise von der Session, in der die Authentisierung stattfindet, abhängt) verwendet, wobei die Signatur dann am Server mit einem dem zweiten Schlüssel zugeordneten Schlüssel geprüft werden kann. Die gesicherte Verbindung kann beispielsweise auf symmetrischer Verschlüsselung basierend auf einem Session-Key beruhen, wobei der Session-Key, oder Information, von der der Session-Key abhängt, beispielsweise mit einem öffentlichen Schlüssel des Servers durch das elektronische Gerät verschlüsselt wird und dann vom Server mit dem zugehörigen privaten Schlüssel entschlüsselt werden kann, wodurch beispielsweise die serverseitige Authentisierung bewerkstelligt werden kann. Der Session-Key kann zusätzlich oder alternativ auch für eine MAC (Message Authentication Code) -Absicherung in der gesicherten Verbindung eingesetzt oder als Grundlage dafür verwendet werden. Beispielsweise existiert ein erster Session-Key für die Verschlüsselung, und ein zweiter Session-Key für die MAC-Absicherung. Beide Session-Keys können aber auch aus dem gleichen Session-Key abgeleitet werden, z.B. durch Hashwertbildung.

Nachrichten des elektronischen Geräts (beispielsweise am elektronischen Gerät bestätigte oder abgelehnte Anmelde- und/oder Transaktionsvorgänge, beispielsweise an einem Server eines Online-Dienstanbieters wie beispielsweise einer Bank), können mit dem zweiten Schlüssel signiert werden (beispielsweise durch Hashwertbildung und Verschlüsselung des Hashwerts), beispielsweise auch dann, wenn diese bestätigten oder abgelehnten Anmelde- und/oder Transaktionsvorgänge über eine gesicherte Verbindung übertragen werden, da die signierten bestätigten oder abgelehnten Anmelde- und/oder Transaktionsvorgänge dann zu Nachweiszwecken in signierter Form archiviert werden können. Wenn der zweite Schlüssel zur Authentisierung gegenüber dem Server verwendet wird, von dem der erste Schlüssel erhalten wurde (und bei dem zuvor bereits eine Authentisierung des Benutzers und/oder des Geräts anhand der Benutzerauthentisierungsinformation erfolgt ist), wird der vorteilhafte Effekt erzielt, dass der Benutzer den zweiten Schlüssel, der beispielsweise ein langer RSA-Schlüssel ist, durch eine beispielsweise verhältnismäßig kurze Benutzerauthentisierungsinformation (beispielsweise eine vier-, fünf- oder sechsstellige PIN) frei schalten kann und sich beispielsweise um die auf dem zweiten Schlüssel basierende Authentisierung (beispielsweise beim Aufbau einer sicheren Verbindung und/oder beim Signieren von Nachrichten) nicht mehr kümmern muss, da diese dann beispielsweise automatisch erfolgt. Ein weiterer vorteilhafter Effekt besteht darin, dass vor der Freischaltung des zweiten Schlüssels durch den Server nicht nur die PIN des Benutzers geprüft wird, sondern optional auch weitere Eigenschaften des elektronischen Geräts und/oder der Software, mit der sich der Benutzer gegenüber dem Server authentisiert, beispielsweise ob die Software noch im Originalzustand (oder in einem Zustand, der sich aus dem Originalzustand durch offizielle Updates ergibt) ist, ob die Version der Software aktuell ist und/oder ob die Software für das elektronische Gerät registriert ist.

Erfindungsgemäß umfasst das erfindungsgemäße Verfahren, ausgeführt an dem elektronischen Gerät, in einer Initialisierungsphase ferner das Erzeugen des zweiten Schlüssels an dem elektronischen Gerät. Bei dem zweiten Schlüssel kann es sich beispielsweise um einen geheimen (oder privaten) Schlüssel eines asymmetrischen Schlüsselpaars (beispielsweise eines RSA-Schlüsselpaars) handeln. Dabei kann beispielsweise ein zu dem zweiten Schlüssel korrespondierenden öffentlicher Schlüssel erzeugt werden, der beispielsweise von dem elektronischen Gerät ausgegeben wird, beispielsweise an den Server, von dem der erste Schlüssel bezogen wird.

Das erfindungsgemäße Verfahren, ausgeführt an dem elektronischen Gerät, kann ferner in der Initialisierungsphase das Ausgeben eines mit dem zweiten Schlüssel assoziierten öffentlichen Schlüssels an den Server beinhalten, um den Server in die Lage zu versetzen, ein Zertifikat (beispielsweise in Public Key Zertifikat) basierend auf dem öffentlichen Schlüssel signiert mit einem Schlüssel des Servers zu erzeugen. Das Zertifikat kann beispielsweise den öffentlichen Schlüssel und eine Signatur einer Repräsentation (beispielsweise eines Hashwerts) davon enthalten. Die Signatur wird mit einem Schlüssel des Servers, beispielsweise einem geheimen Schlüssel des Servers, erstellt. Der geheime Schlüssel des Servers kann beispielsweise eine Zertifizierungsautorität begründen (also beispielsweise der geheime Schlüssel (ROOT Key) einer Zertifizierungsautorität sein) oder mit einem Zertifikat (das beispielsweise seinen zugeordneten öffentlichen Schlüssel enthält) assoziiert sein, das mit dem geheimen Schlüssel (ROOT Key) einer Zertifizierungsautorität signiert wurde. Das vom Server erzeugte Zertifikat kann beispielsweise mit einem Zertifikat geprüft werden (beispielsweise einem Public Key Zertifikat), das zu dem geheimen Schlüssel des Servers korrespondiert und beispielsweise mit einem geheimen Schlüssel einer ROOT-CA signiert ist.

Das vom Server erzeugte Zertifikat kann beispielsweise am elektronischen Gerät vom Server empfangen werden. Es kann dann durch das elektronische Gerät beispielsweise einer anderen Entität (beispielsweise einem Online-Dienstanbieter wie z.B. einer Bank) zur Verfügung gestellt werden, um der Entität die Authentifizierung des Benutzers des elektronischen Geräts und/oder des elektronischen Geräts zu ermöglichen. Die Entität kann dann beispielsweise das vom elektronischen Gerät erhaltene Zertifikat mit dem Zertifikat des Servers prüfen (wobei die Entität beispielsweise dem Zertifikat des Servers vertraut oder dieses anhand eines weiteren Zertifikats prüfen kann).

Alternativ kann das vom Server erzeugte Zertifikat durch den Server der Entität zur Verfügung gestellt werden.

Gemäß einem Ausführungsbeispiel der Erfindung ist der erste Schlüssel ein benutzerindividueller Schlüssel, wobei der erste Schlüssel von dem Server während einer Initialisierungsphase erzeugbar ist (also beispielsweise erzeugt wird). Insbesondere ist der Schlüssel von dem Server in einer Initialisierungsphase zufällig erzeugbar (also wird beispielsweise zufällig erzeugt), also nach einer Vorschrift zur Erzeugung eines zufälligen Schlüssels (beispielsweise durch ein Schieberegister).

Gemäß einem Ausführungsbeispiel der Erfindung ist die Verbindung mit dem Server und/oder die Kommunikation des elektronischen Geräts gesichert. Insbesondere ist die Verbindung und/oder die Kommunikation gemäß dem Secure Socket Layer (SSL)-Protokoll und/oder dem Transport Layer Security (TLS)-Protokoll gesichert.

Gemäß einem Ausführungsbeispiel der Erfindung ist die Kommunikation des elektronischen Geräts eine Online-Banking-Kommunikation. Alternativ kann die Kommunikation des elektronischen Geräts eine Kommunikation des elektronischen Geräts mit dem Server, von dem der erste Schlüssel erhalten wird, sein. Im Rahmen dieser Kommunikation können beispielsweise Informationen zu Anmelde- und/oder Transaktionsvorgängen, die beispielsweise im Rahmen einer Nutzung eines Online-Dienstes (beispielsweise Online-Banking) vorgenommen werden, von dem Server auf das elektronische Gerät übermittelt und dem Benutzer dort angezeigt werden, damit der Benutzer die Anmelde- und/oder Transaktionsvorgänge bestätigen oder ablehnen kann. Im Rahmen der Kommunikation können Informationen über die Bestätigung oder Ablehnung des Benutzers dann an den Server übermittelt werden (beispielsweise mit dem zweiten Schlüssel signiert), der dann beispielsweise eine Information über die Bestätigung oder Ablehnung des Benutzers an einen weiteren Server, beispielsweise einen Server, an dem der Anmelde- und/oder Transaktionsvorgang vorgenommen wurde, übermittelt.

Gemäß einem Ausführungsbeispiel der Erfindung findet die Kommunikation zwischen dem elektronischen Gerät und dem Server statt und dient der Authentisierung - insbesondere der (beispielsweise zusätzlichen) Außerband-Authentisierung - des Benutzers bei Anmelde- und/oder Transaktionsvorgängen, die von dem Benutzer des elektronischen Geräts mit dem elektronischen Gerät oder einem anderen Gerät an einem Server eines Dienstanbieters vorgenommen werden. Beispielsweise kann der Server des Dienstanbieters (beispielsweise ein Online-Banking-Server) eine Anfrage zu dem Server, von dem der erste Schlüssel erhalten wird, senden, um den Anmelde- und/oder Transaktionsvorgang bestätigen zu lassen. Der Server (von dem der erste Schlüssel erhalten wird) kann daraufhin Informationen betreffend den Anmelde- und/oder Transaktionsvorgang an das elektronische Gerät senden und den Benutzer um Bestätigung oder Ablehnung bitten. Die Abfrage der Bestätigung oder Ablehnung kann beispielsweise in einer von der Software, mit der sich der Benutzer am Server authentisiert, bereitgestellten Anzeige dargestellt werden, die sich von einer ebenfalls von der Software bereitgestellten oder zumindest kontrollierten Anzeige, in der Informationen einer Anwendung (beispielsweise einer Browseranwendung), über die der Benutzer die Anmelde- und/oder Transaktionsvorgänge vornimmt, angezeigt werden, unterscheidet. Information betreffend die Bestätigung oder Ablehnung des Benutzers kann dann, beispielsweise signiert mit dem zweiten Schlüssel, an den Server (von dem der erste Schlüssel erhalten wird) zurückgesendet werden, der dann eine entsprechende Information an den anfragenden Server des Dienstanbieters zurückgibt. Damit ist auf dem hinsichtlich der Kommunikation des elektronischen Geräts (oder eines anderen Geräts, beispielsweise einem Computer) mit dem Server des Dienstanbieters separaten Kommunikationskanal (also einem Außerband-Kanal) zwischen dem Server, von dem der erste Schlüssel erhalten wird und dem elektronischen Gerät also eine zusätzliche Authentisierung (eine Außerband-Authentisierung) des Benutzers bei dem Anmelde- und/oder Transaktionsvorgang möglich. Statt der Bestätigung des Anmelde- und/oder Transaktionsvorgangs am elektronischen Gerät kann der Benutzer auch aufgefordert werden, einen Code, der von dem Server, von dem der erste Schlüssel erhalten wird, (beispielsweise wiederum auf Anfrage des Servers des Dienstleisters) erzeugt und an das elektronische Gerät gesendet wird, als Authentisierungsinformation anzugeben, beispielsweise in einer Anwendung (beispielsweise einer Internetseite), über die der Benutzer den Anmelde- und/oder Transaktionsvorgang vorgenommen hat und die entweder auf dem elektronischen Gerät oder auf einem anderen Gerät, beispielsweise einem Computer, läuft. Der Code wird dann beispielsweise an den Server des Dienstanbieters und von diesem an den Server, der den Code erzeugt hat, zur Verifizierung übermittelt und ein entsprechendes Ergebnis an den Server des Dienstanbieters zurückgegeben.

Gemäß einem Ausführungsbeispiel der Erfindung findet die Kommunikation zwischen dem elektronischen Gerät und dem Server statt und dient zur Übermittlung von Authentisierungsinformation, die für einen Anmelde- und/oder Transaktionsvorgang erforderlich ist, den der Benutzer des elektronischen Geräts mit dem elektronischen Gerät bei einem Server eines Dienstanbieters vornehmen möchte, vom Server an das elektronische Gerät. Die Authentisierungsinformation (beispielsweise ein Einmal-Code) kann beispielsweise auf dem elektronischen Gerät empfangen und von einer auf dem elektronischen Gerät laufenden Anwendung, über die der Anmelde- und/oder Transaktionsvorgang durch den Benutzer vorgenommen wird, verarbeitet oder an diese weitergeleitet werden (beispielsweise automatisch), so dass eine händische Eingabe von Authentisierungsinformation (wie beispielsweise Username und Passwort) in die Anwendung durch den Benutzer nicht mehr erforderlich ist. Der Benutzer muss sich also lediglich gegenüber dem Server authentisieren, von dem der erste Schlüssel erhalten wird, eine erneute Authentisierung gegenüber der Anwendung ist nicht erforderlich. Die Anwendung kann dabei beispielsweise Teil einer Software (beispielsweise der erfindungsgemäßen Software) sein, die auch das erfindungsgemäße Verfahren, soweit es am elektronischen Gerät ausgeführt wird, und/oder die Kommunikation des elektronischen Geräts mit dem Server ausführt und/oder steuert. Die Anwendung kann beispielsweise eine Browseranwendung sein, beispielsweise eine gehärtete Browseranwendung. Alternativ kann die Anwendung auch separat von der Software auf dem elektronischen Gerät vorhanden sein (beispielsweise als Browser) und zumindest teilweise von der Software genutzt und/oder gesteuert werden. Beispielsweise kann die Software eine separat auf dem elektronischen Gerät vorhandene Browseranwendung in die Software integrieren und deren Funktionalitäten nutzen (beispielsweise als WebView-Komponente).

Gemäß einem Ausführungsbeispiel der Erfindung wird das erfindungsgemäße Verfahren, ausgeführt an dem elektronischen Gerät, von einer auf dem elektronischen Gerät gespeicherten Software ausgeführt und/oder gesteuert. Die Software kann beispielsweise als Applikation (App) auf das elektronische Gerät heruntergeladen und dort installiert worden sein. Die Software kann beispielsweise auf dem Gerät unverschlüsselt gespeichert sein. Die Software kann beispielsweise einen Zertifikatsspeicher mit vertrauenswürdigen Zertifikaten (beispielsweise von als vertrauenswürdig eingestuften Zertifizierungsautoritäten) umfassen und diesen beispielsweise auf dem elektronischen Gerät speichern. Die öffentlichen Schlüssel von Zertifikaten aus diesem Zertifikatsspeicher werden beispielsweise zur Prüfung von erhaltenen Zertifikaten genutzt oder werden beispielsweise selbst ohne weitere Prüfung in der Kommunikation der Software benutzt (da sie als vertrauenswürdig eingestuft sind). Dieser Zertifikatsspeicher ist beispielsweise ein anderer Zertifikatsspeicher als ein Zertifikatsspeicher, der vor der Installation der Software auf dem elektronischen Gerät vorhanden war. Der Zertifikatsspeicher kann beispielsweise ausschließlich über die Software zugänglich und/oder ausschließlich über die Software veränderbar sein. Die Software kann ferner den zweiten Schlüssel mit dem ersten Schlüssel verschlüsseln und auf dem Gerät speichern. Die Software kann eine Anwendung (beispielsweise eine Browseranwendung) zum Durchführen von Anmelde- und/oder Transaktionsvorgängen bei einem Server eines Dienstanbieters (der sich beispielsweise von dem Server, von dem der erste Schlüssel erhalten wird, unterscheidet oder mit diesem übereinstimmt) umfassen oder zumindest kontrollieren. Die Software kann die Anwendung beispielsweise dergestalt kontrollieren, dass nur Anmelde- und/oder Transaktionsvorgänge mit beispielsweise über eine URL-Whitelist definierten Servern möglich ist. Die Browseranwendung kann beispielsweise gehärtet sein. Die Software kann eine Anzeige für die Browseranwendung und eine weitere Anzeige für von dem Server, von dem der erste Schlüssel erhalten wird, erhaltene Nachrichten umfassen.

Gemäß einem Ausführungsbeispiel der Erfindung wird das Verfahren von einer auf dem elektronischen Gerät gespeicherten Software ausgeführt und/oder gesteuert, wobei zumindest eine Eigenschaft der Software und/oder zumindest eine Eigenschaft des elektronischen Geräts bei der Authentisierung gegenüber dem Server (beispielsweise vom Server) geprüft wird und nur dann der erste Schlüssel erhalten wird, wenn die Prüfung erfolgreich war. Die zumindest eine Eigenschaft der Software kann beispielsweise die Unversehrtheit (oder Integrität) und/oder die Version (insbesondere die korrekte, z.B. höchste momentan verfügbare Version) und/oder die Identität und/oder die korrekte Zuordnung zum elektronischen Gerät der Software sein. Die zumindest eine Eigenschaft des elektronischen Geräts kann beispiels-weise die Unveränderheit der vom Hersteller des elektronischen Geräts für das elektronische Gerät vorgesehenen Benutzer-Zugriffsrechte sein (somit können beispielsweise Manipulationen durch sog. "Jailbreaks" ausgeschlossen werden). Auch mehrere oder alle dieser Eigenschaften können geprüft werden, und der erste Schlüssel entsprechend nur dann erhalten werden, wenn alle Prüfungen (und zusätzlich die Authentisierung des Benutzers und/oder des Geräts, beispielsweise anhand einer PIN) erfolgreich waren. Die Software kann beispielsweise als unversehrt (oder integer) angesehen werden, wenn sie sich im ursprünglichen Zustand befindet oder in einem Zustand, der sich aus dem ursprünglichen Zustand nur durch offizielle Updates herleitet. Dies kann beispielsweise anhand von Hashwerten über Abbilder der Software (beispielsweise im Flash- oder RAM-Speicher) verifiziert werden.

Gemäß einem Ausführungsbeispiel der Erfindung handelt es sich bei der auf dem elektronischen Gerät gespeicherten Software um eine (beispielsweise unverschlüsselte) Starter-Software. Die Startersoftware wird beispielsweise ausgeführt, um den ersten Schlüssel vom Server zu erhalten. Mit dem ersten Schlüssel können dann die auf dem elektronischen Gerät verschlüsselten Daten (beispielsweise eine Kommunikationsapplikation oder ein Teil davon, oder der zweite Schlüssel) entschlüsselt und genutzt werden. Die Starter-Software kann zusätzlich auch zur Ausführung einer Initialisierungsphase eingerichtet sein, in der sich ein Benutzer des elektronischen Geräts (und/oder das elektronische Gerät) gegenüber dem Server authentisiert und bei erfolgreicher Authentisierung den ersten Schlüssel zur Verschlüsselung von Daten zum Erhalt der verschlüsselten Daten erhält. Wenn die entschlüsselten Daten eine Software für die Kommunikation des elektronischen Geräts umfassen, kann diese Software zusammen mit der Startersoftware (und ggfs. weiteren Komponenten) ein (beispielsweise unverschlüsseltes) Softwarepaket bilden, das beispielsweise als Applikation auf das elektronische Gerät geladen werden kann. Alternativ kann es sich um mehrere Softwarepakete/Applikationen handeln.

Gemäß einem Ausführungsbeispiel der Erfindung umfassen die entschlüsselten Daten eine Software für die Kommunikation des elektronischen Geräts. Bei der Software kann es sich beispielsweise um eine Applikation handeln, die von einem Server für Applikationen herunterladbar ist, beispielsweise um eine Applikation für Online-Banking, oder zur Fernsteuerung von Komponenten oder zum Fernzugriff auf Daten oder auf Programme. Die Software kann beispielsweise ein Browser sein. Zum Beispiel ist die Software zumindest teilweise verschlüsselt auf dem elektronischen Gerät gespeichert. Insbesondere ist die Software zumindest ein Teil der auf dem elektronischen Gerät verschlüsselt gespeicherten Daten, die mit dem ersten Schlüssel entschlüsselbar sind. Dies ist unter anderem vorteilhaft, um die Software für jeden Benutzer (und/oder jedes elektronische Gerät) zu individualisieren (zumindest wenn der erste Schlüssel benutzerindividuell ist), so dass ein Reverse Engineering der Software erschwert wird. Außerdem ist dies unter anderem vorteilhaft, da ein Angreifer, selbst wenn er in Besitz des elektronischen Geräts ist, sich erfolgreich gegenüber dem Server authentisieren muss, um die Kommunikation des elektronischen Geräts verwenden zu können.

Gemäß einem Ausführungsbeispiel der Erfindung ist die Software zum Ausführen und/oder Steuern des Verfahrens gehärtet.

Gemäß einem Ausführungsbeispiel der Erfindung ist die Software für die Kommunikation des elektronischen Geräts gehärtet.

Unter Härten versteht man in der Programmiertechnik beispielsweise, nur derartige (dedizierte) Software einzusetzen, die für den Betrieb des Systems notwendig ist und deren unter Sicherheitsaspekten unbedenklicher Ablauf garantiert werden kann. So können bei einer gehärteten Software (beispielsweise einem Browser) sämtliche Softwarebestandteile und Funktionen entfernt werden, die zur Erfüllung der vorgesehenen Aufgabe durch die Software nicht zwingend notwendig sind. Ferner kann eine Härtungsfunktion Anti-Reverse Engineering, Anti-Debugging und/oder Anti-Code-Injektions-Mechanismen umfassen.

Gemäß einem Ausführungsbeispiel der Erfindung ist die Software eine für das elektronische Gerät angepasste Applikation. Eine Applikation ist insbesondere eine sogenannte "App", die beispielsweise von einem sog. "App-Store" an dem elektronischen Gerät erhaltbar ist, beispielsweise im Falle eines Mobiltelefons oder (Tablet-) Computers.

Gemäß einem Ausführungsbeispiel der Erfindung umfasst das Verfahren, ausgeführt an dem Server, in einer Initialisierungsphase ferner die Ausgabe des ersten Schlüssels an das elektronische Gerät zur Verschlüsselung der Daten in dem elektronischen Gerät, wobei die Ausgabe nur nach erfolgreicher Authentifizierung des Benutzers (und/oder des elektronischen Geräts) durch den Server erfolgt.

Gemäß einem Ausführungsbeispiel der Erfindung umfasst das Verfahren, ausgeführt an einem Server, in einer Initialisierungsphase ferner das (beispielsweise zufällige) Erzeugen des ersten Schlüssels.

Die in dieser Spezifikation beschriebenen Ausführungsbeispiele und beispielhaften Ausgestaltungen der vorliegenden Erfindung sollen auch in allen Kombinationen miteinander offenbart sein. Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

## Kurze Beschreibung der Zeichnungen

In den Figuren zeigen

Fig. 1: Eine schematische Darstellung der Komponenten eines Ausführungsbeispiels eines Systems gemäß der Erfindung und eines beispielhaften Ablaufs der Interaktionen zwischen den Komponenten;

Fig. 2: ein beispielhafter Ablauf eines erfindungsgemäßen Verfahrens;

Fig. 3-5b: beispielhafte Anwendungsszenarien der Erfindung;

Fig. 6-8: beispielhafte Szenarien zur Hinterlegung eines geheimen Schlüssels gemäß der Erfindung;

Fig. 9: eine schematische Darstellung der Komponenten eines Ausführungsbeispiels eines elektronischen Geräts gemäß der Erfindung;

Fig. 10: eine schematische Darstellung der Komponenten eines Ausführungsbeispiels eines Servers gemäß der Erfindung; und

Fig. 11: eine schematische Darstellung eines Ausführungsbeispiels eines Speichermediums gemäß der Erfindung.

**Detaillierte Beschreibung einiger beispielhafter Ausführungsformen der vorliegenden Erfindung**

Ausführungsbeispiele der Erfindung beinhalten ein Authentisierungs- und Verschlüsselungsschema, das in einem elektronischen Gerät implementiert werden kann, beispielsweise in Form einer Software (also eines Computerprogramms). Dieses Schema beinhaltet eine enge Anbindung an einen Server, der im folgenden als SSMS (Smart Security Management Server) bezeichnet wird und als zusätzlicher Sicherheitsanker fungiert. Diese Anbindung trägt erheblich zu der mit der Erfindung erzielten erhöhten Sicherheit bei. Der SSMS dient beispielsweise für die Verwaltung der Geräte und der Software. Er kann von einem bankenunabhängigen Dienstanbieter oder einer Bank zur Ermöglichung von Online-Banking selbst bereitgestellt werden.

Im folgenden wird häufig von einem Smartphone als elektronischem Gerät und einer Applikation (einer sog. "App") als Software ausgegangen, die vorliegende Erfindung ist aber nicht auf derartige Ausbildungen eingeschränkt.

Die Sicherheit kann durch den optionalen Einsatz einer zusätzlichen Hardwarekomponente erhöht werden, die beispielsweise über eine drahtlose Verbindung, beispielsweise eine Bluetooth-Verbindung, an das elektronische Gerät angebunden werden kann.

Ausführungsbeispiele der Erfindung stellen eine sichere Lösung für elektronische Geräte (im folgenden beispielhaft auch als mobile Endgeräte bezeichnet) wie beispielsweise Smartphones zur Verfügung. Es besteht eine individuelle Kontrolle über jede Instanz einer Software. Der SSMS wird als sichere Authentisierungs/Authentifizierungs-Instanz eingesetzt (wobei unter Authentisierung der Prozess des Nachweisens der eigenen Identität durch einen Benutzers (beispielsweise gegenüber einem Server) und unter Authentifizierung der Prozess der Überprüfung des Identitätsnachweise eines Benutzers (beispielsweise durch einen Server) verstanden wird).

Ausprägungsformen der Erfindung sind beispielsweise:

- eine Software, insbesondere eine Online-Banking-Software (beispielsweise ein Browser), die auf dem elektronischen Gerät vorhanden ist oder in dieses geladen werden kann, oder
- ein Softwareentwicklungspaket (ein sog. "Software Development Kit" (SDK)), mit dem Software bzw. eine Applikation für elektronische Geräte erstellt werden kann.

Wie bereits erwähnt kann optional auch eine Hardwarekomponente hinzutreten.

Beispielhafte Plattformen für deratige Software sind Apples iOS oder Android. Die Anwendung kann natürlich auch auf elektronischen Geräten mit Windows-, Linux oder Blackberry-Betriebssystemen möglich sein.

In Ausführungsformen der Erfindung läuft die erfindungsgemäße Software auf mobilen Platformen (beispielsweise mobilen Endgeräten, beispielsweise Mobiltelefonen, PDAs, Laptops oder Tablet-Computern) und stellt eine Reihe von eingebauten Sicherheitsfunktionen zur Verfügung, umfassend ein oder mehrere der folgenden Eigenschaften:

- Schutz gegen Debugging und Reverse Engineering
- Zusätzliche Software-Härtungstechniken zum Schutz gegen bekannte Laufzeit-Attacken
- Schutz von URLs für Online-Dienste (wie z.B. URL-Adressen von Banken)
- Ein eingebauter Zertifikatsspeicher für Zertifikate von vertrauenswürdigen Zertifizierungsautoritäten (Certificate Authorities, CA), und/oder für persönliche Zertifikate. Dieser Zertifikatsspeicher ist beispielsweise an die erfindungsgemäße Software gebunden und entspricht insbesondere nicht dem auf dem mobilen Endgerät vorhandenen Zertifikatsspeicher (wie er beispielsweise auch schon vor der Installation der Software vorhanden ist). Dadurch wird eine feiner granulierte Sicherheit erhalten, da nur die genau für die jeweilige Anwendung relevanten Zertifikate (beispielsweise zur Einrichtung/Prüfung von SSL Verbindungen zu Servern von Dienstanbietern und/oder zum SSMS) vorgehalten werden müssen. Die Software kann beispielsweise ausschließlich solche Zertifikate verwenden, die in dem mit ihr verbundenen Zertifikatsspeicher enthalten sind (beispielsweise ursprünglich dort enthalten sind und/oder von der Software in den Zertifikatsspeicher importiert wurden). Die Daten des Zertifikatsspeichers können entweder unverschlüsselt sein, oder - beispielsweise mit dem geheimen Schlüssel des mobilen Endgeräts, der erst nach Authentisierung beim SSMS verfügbar ist, verschlüsselt sein. Zugriff auf den Zertifikatsspeicher kann beispielsweise erst nach einer erfolgreichen Authentisierung am SSMS möglich sein.

Diese Sicherheitsfunktionen verhindern Offline-Attacken, die auf die Analyse von Schwachstellen und die Ausforschung von privaten Nutzerinformationen abzielen. Der URL-Schutz stellt sicher, dass Benutzer den richtigen Online-Dienst erreichen. Der eingebaute Zertifikatsspeicher schützt vor nicht legitimierten digitalen Zertifikaten und Vertrauensankern (CA) im Standard-Zertifikatsspeicher des mobilen Endgeräts. Solche falschen Zertifikate können beispielsweise stillschweigend importiert worden sein, oder zuvor als vertrauenswürdig eingestufte CAs können beispielsweise mittlerweile widerrufen aber das mobile Endgerät diesbezüglich noch nicht aktualisiert worden sein.

Die erfindungsgemäße Software ist mit einem dedizierten Server (dem SSMS) gekoppelt, wird durch diesen geschützt und von diesem verwaltet. Der SSMS wird von einem Anbieter von Online-Diensten (beispielsweise einer Bank) gehostet und ist beispielsweise in die Online-Dienste integriert (wie ein Webserver einer Bank). Der SSMS erzeugt zusammen mit der erfindungsgemäßen Software, die beispielsweise als Applikation auf dem mobilen Endgerät läuft, eine Instanz eines virtuellen Geräts auf dem mobilen Endgerät, das das mobile Endgerät in eine einzigartige Authentisierungsvorrichtung umwandelt. Wenn die Software zum ersten Mal aktiviert wird, wird die Software mit dem dedizierten mobilen Gerät, auf der sie installiert ist, verbunden und beim SSMS registriert. Bei jedem Aufruf der Software nimmt der SSMS eine Reihe von Prüfungen mit der Software vor, beispielsweise eine oder mehrere der folgenden Prüfungen:

- ob die Software wirklich auf dem dedizierten mobilen Endgerät läuft oder auf ein anderes Gerät kopiert wurde (dies kann beispielsweise anhand einer Identifikationsnummer des mobilen Endgeräts, wie beispielsweise einer IMEI (International Mobile Equipment Identity) oder MAC (Medium Access Control) - ID, oder einer anderweitigen charakteristischen und einzigartigen Eigenschaft des mobilen Endgeräts, beispielsweise eines elektromagnetischen Fingerabdrucks des mobilen Endgeräts, geprüft werden, indem beispielsweise geprüft wird, ob die diesbezüglichen Werte von den bei der Registrierung der Software beim SSMS vorliegenden Werten abweichen),
- ob die Software immer noch im Originalzustand ist oder modifiziert wurde (dies kann beispielsweise anhand eines Hashwerts über die Software, beispielsweise im RAM- oder Flash-Speicher, bestimmt werden),
- ob die Version der Software korrekt ist oder aktualisiert werden muss,
- ob die eingegebene PIN (oder ein Passwort) des Benutzers korrekt ist,
- ob das dedizierte mobile Endgerät mit höheren Benutzer-Zugriffsrechten (beispielsweise "Root-Rechten") als vom Hersteller vorgesehen ausgestattet worden ist, beispielsweise um weitere Anwendungen (beispielsweise manipulative Anwendungen) auf dem mobilen Endgerät installieren zu können. Diese Prüfung stellt eine sog. "Jailbreak Detection" dar.

Diese Prüfungen ermöglichen es, Attacken, die auf gefälschter Software zum Zugriff auf Online-Dienste oder auf modifizierter Software zum Ändern von Anmelde- und/oder Transaktionsdaten (beispielsweise gefälschte oder modifizierte Applikationen) beruhen, zu unterbinden. Angreifer müssten sowohl das mobile Endgerät als auch den SSMS gleichzeitig kontrollieren, um die Vertrauenskette zu brechen. Beide Enden kontrollieren allerdings einander und können dadurch jegliche verdächtige Aktivität stoppen. Die PIN (oder das Passwort) des Benutzers wird niemals im mobilen Endgerät gespeichert oder gecached, sondern ist eine Server-Authentifizierungs-PIN. Wenn eine PIN beispielsweise dreimal falsch eingegeben wird, wird die Benutzer-PIN am SSMS gesperrt.

Die erfindungsgemäße Software stellt zusammen mit dem SSMS einen separaten und sicheren Kommunikationskanal zur Verfügung. Wenn die Software auf einem mobilen Endgerät installiert ist, mit dem auf die Online-Dienste eines Servers (beispielsweise eines Bankservers) zugegriffen wird, ist die Verbindung zwischen Software und SSMS (der oben genannte separate und sichere Kommunikationskanal) gegenüber der für diesen Zugriff verwendeten Verbindung als getrennt zu betrachten. Wenn zum Zugriff auf die Online-Dienste eines Servers (beispielsweise eines Bankservers) ein Computer verwendet wird, ist die Verbindung zwischen einem mobilen Endgerät, auf dem die Software installiert ist, ebenfalls getrennt von der für diesen Zugriff verwendeten Verbindung zwischen dem Computer und dem Server. Insgesamt wird also eine duale Kommunikationstechnik etabliert. Die erfindungsgemäße Software kann beispielsweise Teil einer Online-Banking-Software (beispielsweise einer Applikation) sein, die auf einem mobilen Endgerät läuft. Der SSMS kommuniziert mit den Online-Diensten bzw. den diese bereitstellenden Servern (oder ist ein Teil dieser Server). Der Kommunikationskanal zwischen der Software und dem SSMS unterscheidet sich also von den für den Zugriff auf die Online-Dienste verwendeten herkömmlichen Kommunikationskanälen (die im Stand der Technik als "sicher" angesehen werden). Vorteilhaft ist hier insbesondere, dass generische Angriffe auf diese herkömmlichen Kommunikationskanäle keine Auswirkungen auf die Sicherheit des Kommunikationskanals zwischen der Software und dem SSMS (da beispielsweise der geschützte Zertifikatsspeicher der Software durch derartige Angriffe nicht tangiert wird).

Ausführungsbeispiele der erfindungsgemäßen Software stellen, zusammen mit dem SSMS, eine oder mehrere der folgenden Funktionen zur Verfügung:

- Die Software hat eine eingebaute sichere Verbindung zum dedizierten SSMS (also beispielsweise dem SSMS, bei dem sie registriert ist).
- Der SSMS hat alle Informationen über die registrierte Software and führt die oben beschriebenen Kontrollfunktionen aus.
- Der SSMS kann die Software aus der Ferne personalisieren (beispielsweise mit Nutzerspezifischen Informationen).
- Der SSMS verschlüsselt und schützt die privaten Daten der Software.
- Es besteht eine Ende-zu-Ende-Verschlüsselung und Authentifizierung auf dieser zweiten Kommunikationsstrecke (zwischen der Software und dem SSMS).

Diese Funktionen unterbinden Man-in-the-middle-Angriffe und stellen die Vertraulichkeit und Integrität der Daten sicher. Online-Dienstanbieter (beispielsweise eine Bank) können beispielsweise Anmelde- und/oder Transaktionsbestätigungen vom SSMS anfordern. Die Bestätigung des Benutzers und die Verifizierung sind bereits in diesem zweiten Kommunikationskanal integriert.

Ausführungsbeispiele der vorliegenden Erfindung haben gegenüber den nachfolgend aufgelisteten Authentifizierungsverfahren folgende Vorteile:

- Das Versenden von SMS (Short Message Service) mit Einmalpasswörtern (One-Time Password, OTP) als alternative Authentifizierungsmethode, bei der für den Versand jeder SMS (auch bei Massentarifen) zwischen 6-10 Euro Cent zu entrichten sind und die verhältnismäßig leicht durch bösartige Software auszuspähen und/oder durch SMS-Um- oder Weiterleitung zu unterhöhlen ist, kann vermieden werden.
- Die Verwendung von Software/Applikationen zur Erzeugung von Einmalpasswörtern (OTP) auf mobilen Endgeräten als alternative Authentifizierungsmethode kann vermieden werden. Derartige OTP-Software kann beispielsweise auf andere mobile Endgeräte oder Computer kopiert werden und ist anfällig für Offline-Angriffe, beispielsweise durch Debugging, Reverse Engineering und Brute-Force-Attacken zur Ermittlung der Anwendungs-PIN, die meist nur 4 oder 6 Stellen aufweist (selbst wenn sich die OTP-Software nach 3 falschen PIN-Eingaben sperrt, stehen zum weiteren Ausprobieren unendlich viele weitere Kopien der OTP-Software zur Verfügung). Die eingesetzten OTPs sind meist nicht transaktionsgebunden und daher anfällig für Phising, Pharming, Man-in-the-middle-Angriffe und Man-in-the-browser-Angriffe. Wenn die OTPs transaktionsspezifisch sind, müssen die Transaktionsdaten vom Benutzer zumeist zweifach eingegeben werden, einmal auf dem Computer, auf dem der Zugriff zum Dienstanbieter erfolgt, und einmal auf dem mobilen Endgerät, auf dem der OTP dann erzeugt wird. Dies ist fehleranfällig und wenig benutzerfreundlich.
- Auch der Einsatz von dedizierten Hardware-Token (beispielsweise TAN-Generatoren) kann vermieden werden. Das Erfordernis eines solchen zusätzlichen Geräts wird zumeist als lästig empfunden im Gegensatz zur Nutzung beispielsweise eines Mobiltelefons, das auch anderen Zwecken dient. Grundsätzlich unterliegen solche Hardware-Token den gleichen Problemen wie die OTP-Software. Zudem beruhen OTP-Lösungen oft auf symmetrischer Verschlüsselung, so dass der Schlüssel zumindest am Verifikationsserver vorhanden sein muss und dort theoretisch abgegriffen werden kann.
- Die Vergabe von Software-Zertifikaten für mobile Endgeräte durch die Online-Dienstanbieter, die kostenintensiv und aufwändig in der Umsetzung (insbesondere hinsichtlich der Vergabe und der Verifikation) ist, wird vermieden. Bei Software-Zertifikaten besteht wiederum ähnlich wie bei OTP-Software die Gefahr, dass Angreifer auf den systemweiten Zertifikatsspeicher des mobilen Endgeräts (also den bereits bei Auslieferung des Geräts vorhandenen Zertifikatsspeicher) zugreifen und/oder geheime Schlüssel herauskopieren.

Ausführungsbeispiele der vorliegenden Erfindung nutzen weder SMS noch OTP-Software. Stattdessen werden gesicherte digitale Zertifikate als Nutzerzertifikate eingesetzt, die allerdings nicht vom Dienstanbieter (beispielsweise einer Bank) ausgegeben und verifiziert werden müssen, denn diese Aufgabe übernimmt der SSMS. Dadurch werden einer oder mehrere der folgenden Vorteile erzielt:

- Die Nutzerzertifikate beruhen auf asymmetrischen (geheimen und öffentlichen) kryptographischen Schlüsseln. Nur der Benutzer ist im Besitz des einzigartigen geheimen Schlüssels (in verschlüsselter Form), und es gibt keine Kopie des geheimen Schlüssels am SSMS (und auch an keinem anderen Server).
- Der SSMS verfügt über eine eingebaute Zertifizierungsautorität (CA) zur Ausgabe von Nutzerzertifikaten. Der Kern der Softwarekomponenten dieser CA stammen beispielsweise von einer Common Criteria (CC) EAL 3+ bewerteten Trustcenter-Lösung. Es gibt keine zusätzlichen Kosten pro Nutzerzertifikat.

- Der SSMS kann Nutzerzertifikate für jede registrierte erfindungsgemäße Software ausgeben, wobei keine Nutzerinformation gesammelt und auch kein komplizierter Ausrollprozess implementiert und verwaltet werden muss. Das Ausrollen der Zertifikate geschieht für den Benutzer und den Online-Dienstanbieter nahtlos. Die Zertifikate enthalten den jeweiligen öffentlichen Schlüssel des asymmetrischen Schlüsselpaars, das in der jeweiligen erfindungsgemäßen Software erzeugt wird, werden am SSMS basierend auf der CA signiert und dann beispielsweise an die jeweilige erfindungsgemäße Software oder an andere Entitäten ausgegeben.
- Beide Komponenten (SSMS und erfindungsgemäße Software) können signierte (authentische) Nachrichten an den anderen senden und entsprechend digitale Signaturen verifizieren.
- Es existiert in der erfindungsgemäßen Software ein eingebauter Zertifikatsspeicher für Zertifikate von vertrauenswürdigen Zertifizierungsautoritäten (CA) und/oder für persönliche Zertifikate.
- Lokale Daten der erfindungsgemäßen Software können mit einem einzigartigen Schlüssel, der am zugeordneten SSMS verwaltet wird, verschlüsselt werden (beispielsweise am mobilen Endgerät). Die verschlüsselten lokalen Daten können beispielsweise einen geheimen Schlüssel des mobilen Endgeräts umfassen, der für die Kommunikation des mobilen Geräts bestimmt ist (beispielsweise für eine Authentisierung im Rahmen dieser Kommunikation). Optional kann auch der Zertifikatsspeicher verschlüsselt werden.

In Ausführungsbeispielen der Erfindung können Online-Dienstanbieter die Vorteile der Erfindung nutzen, indem die erfindungsgemäße Software (beispielsweise als Teil einer umfangreicheren Anwendungssoftware, die zum Zugriff auf den Anwendungsserver des Online-Dienstanbieters dient, beispielsweise einer Online-Banking-Applikation) in mobilen Endgeräten eingesetzt wird und der Anwendungsserver mit dem SSMS kommuniziert, wenn ein Anmelde- und/oder Transaktionsvorgang zu bestätigen ist. Der Anwendungsserver und die Anwendungssoftware kommunizieren dann auf einer geschäftsprozessbezogenen logischen Schicht, während die erfindungsgemäße Software und der SSMS eine sicherheitsbezogene, zu der geschäftsprozessbezogenen Schicht dualen Schicht einführen und auf dieser kommunizieren.

Die erfindungsgemäße Software kann beispielsweise im Rahmen eines Software-Entwicklungssets (Software Development Kit, SDK) bereitgestellt werden und dann von Entwicklern zur Anpassung von bestehender Anwendungssoftware oder zur Schaffung neuer Anwendungssoftware genutzt werden.

Die clientseitige Schnittstelle umfasst beispielsweise nur einige grundlegende Funktionsaufrufe, die einfach in die Anwendungssoftware zu integrieren sind. Das SDK kann beispielsweise eine binäre Bibliothek und ein Quellcode zur Demonstration der unterschiedlichen Funktionsaufrufe umfassen. Die Kommunikation erfolgt mittels einer asynchronen Schnittstelle, das die Anwendungssoftware während der Ausführung der Sicherheitsfunktionen nicht blockiert.

Die serverseitige Schnittstelle kann beispielsweise über das programmiersprachenunabhängige Simple Object Access Protocol (SOAP) realisiert werden. Der SSMS ist beispielsweise ein separater Server, der in einer sicheren Umgebung laufen sollte. Wenn eine Bestätigung zu einem Anmelde- oder Transaktionsvorgang vom SSMS erforderlich ist, kann dies beispielsweise über eine SOAP-Anfrage vom Anwendungsserver an den SSMS erfolgen. Der SSMS kann auch Aktivierungscodes zur Nutzerregistrierung erzeugen, die vom SSMS durch SOAP-Anfragen des Anwendungsservers angefordert werden können.

In Ausführungsbeispielen der Erfindung liefert der SSMS einzigartige Einmal-Aktivierungscodes für jede mobile Plattform. Wenn ein Benutzer auf die Online-Dienste mit unterschiedlichen Geräten zugreift, erhält er beispielsweise jeweilige Aktivierungscodes für jedes dieser Geräte. Die Aktivierungscodes können durch den Dienstanbieter - ja nach dessen internen Sicherheitsrichtlinien - beispielsweise an die Endnutzer verteilt werden durch gedruckte Medien (Brief, etc.), durch SMS an vorregistrierte Mobiltelefonnummern, über Callcenter (nachdem der angerufene Benutzer vordefinierte Sicherheitsfragen richtig beantwortet hat), über Niederlassungen (von Angesicht zu Angesicht), oder über eine Internetseite, auf der sich der Benutzer erfolgreich authentisiert hat (beispielsweise mit seinen bisherigen Authentisierungsdaten, beispielsweise statisches Passwort, OTP, SMS, soft OTP, ...).

In Ausführungsbeispielen der Erfindung wird - beispielsweise unter Nutzung des SDKs - eine generische Anwendungssoftware als "Applikation" od. "App" mit der darin eingebetteten und vorkonfigurierten erfindungsgemäßen Software erzeugt und in einen oder mehrere "Application Stores" hochgeladen. Die erfindungsgemäße Software (als Teil der Anwendungssoftware) ist beispielsweise für eine bestimmte SSMS URL-Adresse vorkonfiguriert. Als vertrauenswürdiges Server-Zertifikat kann in der erfindungsgemäßen Software (beispielsweise in deren Zertifikatsspeicher) beispielsweise das Zertifikat des Servers vorkonfiguriert sein, der vom Online-Dienstanbieter (beispielsweise einer Bank) gehostet und verwaltet wird. Der Benutzer lädt die Anwendungssoftware mit der erfindungsgemäßen Software vom "Application Store" herunter. Zur Erhöhung der Sicherheit kann es vorgesehen sein, dass der Benutzer zusammen mit dem Aktivierungscode über den legitimen Link informiert wird, wo er die Anwendungssoftware herunterladen kann. Falls eine gefälschte Anwendungssoftware heruntergeladen wird, kann der SSMS dies erkennen und die Kommunikation mit dem Benutzer einstellen.

Wie nachfolgend noch genauer beschrieben wird, ist zur erstmaligen Nutzung der Anwendungssoftware mit der integrierten erfindungsgemäßen Software die Eingabe des Aktivierungscodes und die Definition einer PIN (oder eines Passworts) durch den Benutzer erforderlich. Alle weiteren Registrierungs-, Eintragungs- und Personalisierungsprozesse laufen automatisch und nahtlos aus Sicht des Benutzers. Die PIN wird am SSMS gespeichert und dort jedes Mal verifiziert, wenn der Benutzer die Anwendungssoftware neu startet, um sich zu authentisieren. Sie wird allerdings nicht am mobilen Endgerät des Benutzers gespeichert, auch nicht in verschlüsselter Form. Eine mehrmalige Falscheingabe der PIN führt zur Sperrung des Nutzerkontos am SSMS, so dass im Falle des Diebstahls des mobilen Endgeräts weder die Nutzung der Authentisierungsfunktion des mobilen Endgeräts noch die Extraktion der PIN möglich ist. Im Falle der Verlust der PIN kann beispielsweise erneut nach dem Durchlaufen einer Sicherheitsüberprüfung ein Aktivierungscode an den Benutzer übermittelt werden (auf den oben beschriebenen Kanälen).

Nach der Eingabe einer gültigen PIN laufen alle Registrierungsprozesse am SSMS und die Sicherheitsprüfung der Anwendungssoftware automatisch durch den SSMS ab. Wenn dann beispielsweise Anmelde- oder Transaktionsvorgänge durch den Benutzer zu bestätigen sind, wird dem Benutzer entsprechender authentischer Text zur Bestätigung oder Ablehnung auf dem mobilen Endgerät angezeigt. Im Falle einer Bestätigung wird diese von der erfindungsgemäßen Software unter Nutzung eines geheimen Schlüssels signiert und an den SSMS gesendet, der die signierte Nachricht verifiziert und den Anwendungsserver über die Bestätigung informiert. Die Signierungs- und Verifizierungsprozesse laufen aus Sicht der Anwendungsservers nahtlos ab. Im Falle von riskanten Transaktionen kann gegebenenfalls erneut die Eingabe der PIN vom Benutzer verlangt werden.

In Ausführungsbeispielen der Erfindung kommt das folgende Konzept zur Anwendung:

- eine Software (z.B. in Form einer Applikation) wird von einem Server, beispielsweise einem "Application-Store" (AppStore), auf das elektronische Gerät heruntergeladen
- der SSMS wird als Sicherheitsanker für die Software verwendet
- bezüglich des elektronischen Geräts lokale Daten der Software sind mit einem Schlüssel (beispielsweise einem AES-Schlüssel) verschlüsselt, der vom SSMS während der Sitzung erhalten wird (bei den lokalen Daten kann es sich beispielsweise um einen Teil der Software handeln, beispielsweise um einen Teil, der zumindest teilweise eine Online-Banking-Funktionalität implementiert; die lokalen Daten können alternativ oder zusätzlich einen geheimen Schlüssel zur Authentisierung, Signierung und/oder Verschlüsselung umfassen)
- bei jeder Verwendung od. bei jedem Start der Software findet eine Authentisierung gegenüber dem SSMS statt
- die Software kann - u.a. gegen Reverse-Engineering - zumindest teilweise gehärtet sein.

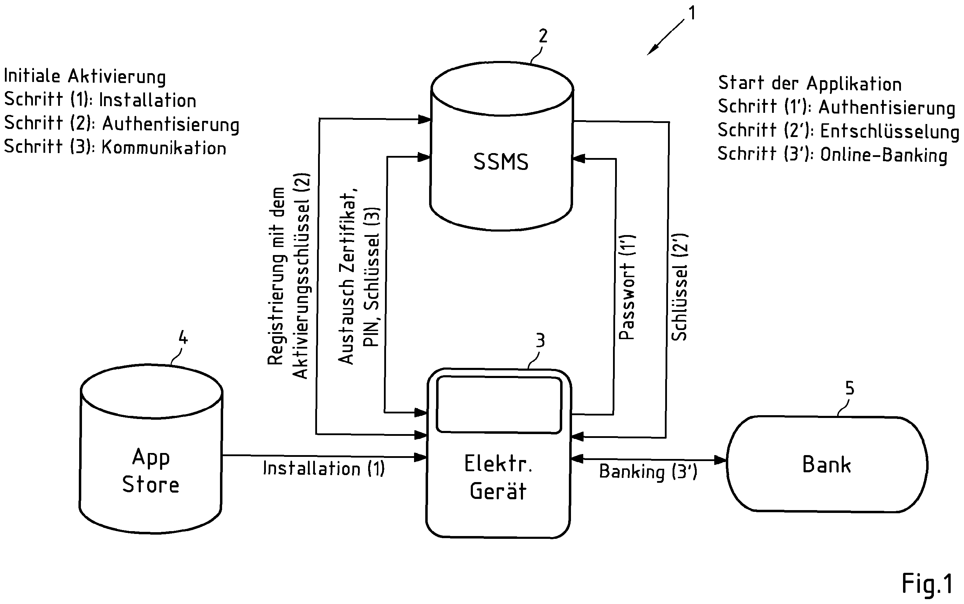

Fig. 1 ist eine schematische Darstellung der Komponenten eines Ausführungsbeispiels eines Systems 1 gemäß der Erfindung und eines beispielhaften Ablaufs der Interaktionen zwischen den Komponenten. Dabei wird unterschieden zwischen einer initialen Aktivierungsphase der Software/Applikation (im linken Teil dargestellt) und einer Phase, in der die Software/Applikation genutzt wird (im rechten Teil dargestellt).

Die Software wird beispielsweise von einem App-Store 4 auf das elektronische Gerät 3 heruntergeladen und dort z.B. zumindest teilweise installiert. Ein Teil der Software (z.B. eine Startsoftware) ist zur Ausführung und/oder Steuerung der Schritte (2) und (3) vorgesehen. Dieser Teil der Software (oder ein anderer Teil) kann ebenfalls die Schritte (1') und (2') ausführen und/oder steuern. Ein weiterer Teil der Software kann dann beispielsweise den Schritt (3') ausführen und/oder steuern.

Die Software richtet zunächst eine sichere Verbindung (beispielsweise eine SSL-Verbindung) zwischen dem elektronischen Gerät 2 und dem SSMS 3 ein. Die serverseitige Authentisierung (also durch den SSMS 3) beruht dabei beispielsweise auf einem hartcodierten Zertifikat (das beispielsweise im elektronischen Gerät 2 hinterlegt ist (beispielsweise ist dieses Zertifikat mit oder von der Software auf das elektronische Gerät installiert worden) und zur Prüfung eines Zertifikats des SSMS verwendet werden kann), die clientseitige Authentisierung (also durch das elektronische Gerät 2) beruht beispielsweise auf einem Aktivierungsschlüssel (der beispielsweise per Post oder Email empfangen worden sein kann) oder einer PIN, die beispielsweise während der Aktivierung gesetzt worden sein kann. PIN und Aktivierungscode haben hier grundsätzlich eine ähnliche Funktion, aber zu unterschiedlichen Zeitpunkten: Bei der Erst-Anmeldung authentisiert sich der Benutzer mit dem Aktivierungscode. Dieser ist nur einmalig gültig und verfällt. Im gleichen Schritt muss der Benutzer aber auch eine persönliche PIN festlegen (sie wird zusammen mit dem Aktivierungscode an den SSMS übermittelt), die von nun an für alle künftigen Zugriffe genutzt werden muss.

Die Software speichert zumindest einen Teil der Daten (beispielsweise eine Software zur Kommunikation mit der Bank 5, oder Daten, die diese Software zur Kommunikation mit der Bank 5 nutzt, wie z.B. einen geheimen Schlüssel oder ein Zertifikat) in verschlüsselter Form (z.B. basierend auf einer symmetrischen oder asymmetrischen Verschlüsselung), beispielsweise mittels AES-Verschlüsselung. Der Schlüssel stammt vom SSMS 2 (Schritt (3)) und wird niemals lokal im Gerät 3 gespeichert. Die Software kann die Daten erst entschlüsseln, wenn sie sich beim SSMS 2 eingeloggt hat.

Während der Aktivierungsphase wird in der Software ein Client-Zertifikat erzeugt und vom SSMS 2 signiert (Schritt (3)). Dieses Zertifikat wird beispielsweise zum Online-Banking mit einer Bank 5 verwendet. Der zugehörige geheime Schlüssel verlässt die Software (und das Gerät 3) niemals. Er wird beispielsweise mit dem AES-Schlüssel im Gerät 3 verschlüsselt und dort gespeichert.

Bei jeder Verwendung oder bei jedem Start der Software findet ein Einloggen beim SSMS 2 statt (Schritt (1')), um den Schlüssel zu erhalten (Schritt (2')). Der SSMS 2 kann beispielsweise einen Versionscheck bezüglich der Version der Software auf dem Gerät 3 durchführen und veraltete Software updaten oder sperren. Auch weitere Prüfungen durch den SSMS 2 sind möglich, beispielsweise betreffend die Integrität der Software, die Version der Software, ob die Software auf dem (korrekten) elektronischen Gerät 3 installiert ist und/oder ob die vom Hersteller für das elektronische Gerät vorgesehenen Benutzer-Zugriffsrechte (beispielsweise hinsichtlich der Berechtigung des Benutzers, Programme auf dem elektronischen Gerät zu installieren und/oder zu verändern) unverändert geblieben sind ("Jailbreak" Erkennung). Durch die Notwendigkeit des Einloggens liegt eine vollständige Kontrolle durch den Benutzer vor.

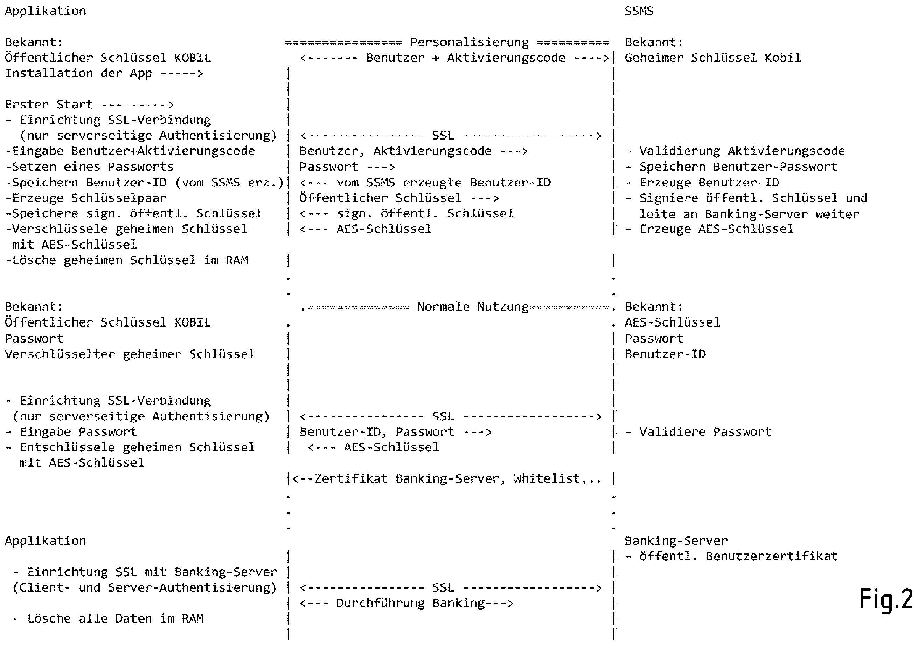

Der Ablauf eines beispielhaften erfindungsgemäßen Verfahrens ist Fig. 2 dargestellt, wobei zunächst von einer Personalisierungsphase der Software ausgegangen wird. In dieser Phase wird die Software installiert und erstmalig gestartet (z.B. durch eine unverschlüsselte Starter-Software). Hierbei wird zunächst eine SSL/TLS-Verbindung mit (beispielsweise lediglich) serverseitiger Authentisierung eingerichtet. Dazu übermittelt der SSMS der Software ein Zertifikat, das die Software mit dem dort vorhandenen öffentlichen Schlüssel (KOBIL) prüfen kann (alternativ kann auch bereits ein Zertifikat des SSMS in der Software (beispielsweise in dem Zertifikatsspeicher für vertrauenswürdige Zertifikate) vorhanden sein, eine Prüfung kann dann entfallen).

Mit dem öffentlichen Schlüssel aus dem Zertifikat verschlüsselt die Software dann einen Session-Key, auf dem die Verschlüsselung der Daten der SSL-Verbindung beruht, und übermittelt den verschlüsselten Session-Key dem SSMS. Der SSMS entschlüsselt den Session-Key mit dem dort vorhandenen zugehörigen geheimen Schlüssel. Damit ist die Authentisierung des Servers abgeschlossen. Der öffentliche Schlüssel (KOBIL), der in der Software hinterlegt ist, fungiert dabei als Vertrauensanker. Die Software muss also im Grunde nur den öffentlichen Schlüssel KOBIL bzw. das zugehörige Zertifikat kennen und nicht das Zertifikat jeder SSMS Server Instanz, an die die Software gfs. gebunden wird. Beispielsweise ist das der Software übermittelte Zertifikat des SSMS (das beispielsweise den öffentlichen Schlüssel des SSMS enthält) mit dem geheimen Schlüssel (KOBIL) der KOBIL ROOT CA signiert, dann kann die Software dies Gültigkeit dieses Zertifikats mit dem öffentlichen Schlüssel KOBIL prüfen. Die Software kann dann also vorteilhaft mit unterschiedlichen SSMS-Servern verwendet werden, solange diese SSMS-Server Zertifikate verwenden, die mit dem geheimen Schlüssel (KOBIL) der KOBIL ROOT CA signiert sind.

Im Zertifikat des SSMS, das der Software übermittelt wird, kann statt des öffentlichen Schlüssels des SSMS auch ein beispielsweise speziell für die Verschlüsselung des Session Keys erzeugter öffentlicher Schlüssel eines asymmetrischen Schlüsselpaares vom SSMS erzeugt und signiert werden (beispielsweise mit dem geheimen Schlüssel (KOBIL), beispielsweise, um nicht bei jedem Aufbau einer sicheren Verbindung den gleichen Schlüssel zur Verschlüsselung des Session-Keys zu verwenden. Alternativ kann der SSMS auch ein Unterzertifikat mit einem zur Verschlüsselung des Session-Keys zu verwendenden öffentlichen Schlüssel erzeugen und mit dem geheimen Schlüssel des SSMS signieren. Die Prüfung der Gültigkeit dieses Unterzertifikats kann dann anhand des Zertifikats des SSMS in der Software erfolgen, das wiederum anhand des öffentlichen Schlüssels (KOBIL) geprüft werden kann.

In der Software wird ein Schlüsselpaar aus einem "öffentlichen" und einem "geheimen" (od. "privaten") Schlüssel erzeugt (beispielsweise ein RSA-Schlüsselpaar (nach Rivest, Shamir, Adleman)). Der öffentliche Schlüssel wird vom SSMS signiert (mit dem geheimen Schlüssel (KOBIL) oder dem geheimen Schlüssel des SSMS) und beispielsweise an den unten beschriebenen Banking-Server weitergeleitet. Alternativ verbleibt der öffentliche Schlüssel im SSMS. Auf diese Weise kann der SSMS also auf der KOBIL ROOT CA beruhende Nutzerzertifikate (mit dem jeweiligen öffentlichen Schlüssel der Software) erzeugen, die zur Authentisierung der Software genutzt werden können, beispielsweise von dem Banking-Server oder anderen Servern, die der KOBIL ROOT CA vertrauen.

Der geheime Schlüssel wird mit einem Schlüssel, hier beispielhaft einem AES-Schlüssel, der vom SSMS erzeugt wird, im Gerät verschlüsselt. Zusätzlich können auch Teile der Software selbst mit dem Schlüssel verschlüsselt werden, so dass diese Teile erst ausführbar sind, wenn der Schlüssel vom SSMS erhalten wurde. Dadurch wird erreicht, dass auch beim Auslesen der Software ein Reverse-Engineering erschwert wird, da sie zumindest teilweise verschlüsselt ist und der Schlüssel zudem individuell (bezogen auf das Gerät und/oder den Benutzer) ist.

In der Phase "normale Nutzung" wird vor der eigentlichen Nutzung der Software (hier beispielhaft Online-Banking mit einem Banking-Server) eine Verbindung zum SSMS hergestellt, um den AES-Schlüssel zur Entschlüsselung des verschlüsselten geheimen Schlüssels (und etwaiger verschlüsselter Softwareteile) im Gerät zu erhalten (beispielsweise durch eine unverschlüsselte Starter-Software). Des Weiteren können hier optional weitere Informationen wie ein Zertifikat des Banking-Servers und/oder eine Whitelist erhalten werden.

Der geheime Schlüssel wird dann in der Kommunikation (beispielsweise zur Verschlüsselung/Signierung von Nachrichten) mit dem Banking-Server verwendet (dem beispielsweise zuvor der vom SSMS signierte öffentliche Schlüssel, der zu dem geheimen Schlüssel gehört), übermittelt wurde. Im vorliegenden Fall wird eine SSL/TLS-Verbindung mit client- und serverseitiger Authentisierung eingerichtet, beispielsweise gemäß dem Request for Comments (RFC) Dokument 5246 "The Transport Layer Security (TLS) Protocol Version 1.2". Die Authentisierung des Banking-Servers gegenüber der Software beruht auf dem Zertifikat des Banking-Servers, das der Software zuvor (optional) vom SSMS übermittelt wurde. Dieses Zertifikat kann beispielsweise vom SSMS (oder einer anderen Entität) signiert sein (beispielsweise mit dem geheimen Schlüssel (KOBIL) und dann anhand des in der Software (beispielsweise in deren Zertifikatsspeicher für vertrauenswürdige Zertifikate) vorhandenen öffentlichen Schlüssels (KOBIL) geprüft werden. Alternativ kann das Zertifikat des Banking-Servers auch von einer anderen Entität signiert sein, solange die Software in ihrem Zertifikatsspeicher für vertrauenswürdige Zertifikate einen entsprechenden öffentlichen Schlüssel zur Prüfung der Signatur besitzt. Als weitere Alternative kann das Zertifikat des Banking-Servers mit dessen öffentlichem Schlüssel auch bereits im Zertifikatsspeicher für vertrauenswürdige Zertifikate der Software enthalten sein, dann ist keine Prüfung des Zertifikats mehr erforderlich. Die Authentisierung des Banking-Servers kann dann beispielsweise dadurch geschehen, dass die Software einen Session Key (oder eine Zufallszahl, aus der der Session-Key abgeleitet wird) mit dem öffentlichen Schlüssel des Banking-Servers (aus dem Zertifikat) verschlüsselt und der Banking-Server diese verschlüsselte Information dann nur mit seinem geheimen Schlüssel entschlüsseln kann.

Die Authentisierung der Software beruht auf einem Zertifikat, das den in der Software erzeugten öffentlichen Schlüssel enthält. Dieses Zertifikat wurde zuvor vom SSMS signiert und dem Banking-Server übermittelt, wie oben bereits beschrieben wurde. Beispielsweise kann die Software eine Information (beispielsweise eine vom Banking-Server erhaltene Challenge oder andere, beispielsweise session-spezifische Information) mit dem geheimen Schlüssel signieren. Die Signatur kann dann vom Banking-Server anhand des öffentlichen Schlüssels aus dem vom SSMS erhaltenen Zertifikat geprüft und somit die Software authentifiziert werden.

Zusätzlich oder alternativ kann der geheime Schlüssel auch zur Kommunikation mit dem SSMS eingesetzt werden, beispielsweise zur Einrichtung einer sicheren (beispielsweise verschlüsselten) Verbindung (beispielsweise einer verschlüsselten Verbindung, die zumindest auf clientseitiger (und vorzugsweise auch auf serverseitiger) Authentisierung beruht, beispielsweise einer SSL- oder TLS-Verbindung mit client- und serverseitiger Authentisierung), und/oder zur Signierung von Nachrichten (mit dem geheimen Schlüssel), die an den SSMS geschickt werden. Wenn vom Gerät 3 signierte Nachrichten an den SSMS gesendet werden, beispielsweise zur Bestätigung eines Anmelde- oder Transaktionsvorgangs, können diese signierten Nachrichten beispielsweise im SSMS oder im Banking-Server archiviert werden, um später einen Nachweis für die Bestätigung des Anmelde- oder Transaktionsvorgangs durch den Benutzer zu haben. Der geheime Schlüssel kann zusätzlich oder alternativ auch zur Verschlüsselung von an den SSMS gesendeten Nachrichten verwendet werden.

Die Software trägt hier Sorge dafür, dass der geheime Schlüssel (und der AES-Schlüssel) nach erfolgter Verwendung wieder gelöscht wird (er kann allerdings beispielsweise nach erneuter Anforderung des AES-Schlüssels vom SSMS erneut entschlüsselt und verwendet werden). Der geheime Schlüssel kann beispielsweise nur im RAM-Speicher, aber nicht im FLASH-Speicher gespeichert werden. Das Ausschalten dieser Funktion kann durch geeignete Härtung der Software verhindert werden.

Aus Benutzersicht gibt es hier also zwei unterschiedliche Nutzungsszenarien:

1. Aktivierung

- Findet einmal pro Installation der Software auf dem Gerät statt
- Der Aktivierungsschlüssel wird beispielsweise per Post od. Email erhalten
- Die Software wird auf dem Gerät installiert
- Der Aktivierungsschlüssel wird eingegeben
- Eine PIN (Passwort) wird ausgewählt und eingegeben

2. Start der Software

- Findet bei jedem Start bzw. bei jeder Wiederaufnahme der Software statt
- Eingabe der PIN (Passwort)
- Nutzung der Funktionalität der Software (beispielsweise Online-Banking)
- Ggfs. Bezug von Updates über einen Internet-Server (z.B. einen AppStore)

Im Vergleich zu bekannten Lösungen mit Soft-Zertifikaten bietet die Erfindung u.a. den Vorteil, dass durch Implementierung eines Zählers für falsche PIN-Eingaben am SSMS Brute-Force-Attacken vermieden werden können. Denn der SSMS ist im Gegensatz zu den Geräten, auf denen die Software betrieben wird, manipulationssicher. Insbesondere ist ein Rücksetzen eines derartigen Zählers lediglich am Gerät, allerdings nicht am SSMS möglich. Zusätzlich oder alternativ kann am SSMS auch ein Wartezeitraum, der abgewartet werden muss, bevor nach einer falschen Passworteingabe erneut eine Passworteingabe vorgenommen werden kann, definiert (und somit durch Angreifer nicht manipuliert) werden, der Brute-Force-Angriffe erheblich erschwert, beispielsweise in der Größenordnung von einigen Minuten oder Stunden (beispielsweise mindestens 5 od. 10 min. als Wartezeitraum).

Außerdem erlaubt es die Erfindung, kritische Daten zu schützen. Dies wird in der oben beschriebenen Ausführungsform der Erfindung dadurch erzielt, dass der geheime Schlüssel und/oder zumindest Teile der Software mit einem AES-Schlüssel verschlüsselt sind, der vom SSMS nur in einer bestehenden SSL-Sitzung bereitgestellt wird. Es sind also keine Offline-Attacken möglich (beispielsweise bei Diebstahl des Geräts).

Die Software/Applikation kann beispielsweise mehrere Komponenten umfassen, die entweder ein Softwarepaket (beispielsweise eine von einem AppStore herunterladbare Applikation) bilden oder zumindest teilweise separat vorliegen. Beispielsweise kann ein unverschlüsseltes Starter- oder Ladeprogramm vorgesehen sein, dass zur Einrichtung der Verbindung mit dem SSMS, der Abwicklung der Authentisierung gegenüber dem SSMS und dem Empfang des AES-Schlüssels vom SSMS dient. Eine weitere Komponente der Software kann dann zur eigentlichen Kommunikation des Geräts (beispielsweise mit einer weiteren Einheit wie z.B. einem Online-Banking-Server), bestimmt und zu diesem Zweck mit dem AES-Schlüssel verschlüsselt sein, so dass sie erst nach Entschlüsselung nutzbar ist. Diese Komponente kann beispielsweise einen Browser umfassen, der beispielsweise gehärtet sein kann. Diese Kommunikationskomponente kann natürlich auch eine graphische Benutzerschnittstelle und weitere Komponenten beinhalten, die zur Ausführung der eigentlichen Kommunikationsanwendung (beispielsweise Online Banking) notwendig sind, nicht nur die reinen Kommunikations-Komponenten. Eine weitere Komponente der Software kann zur Durchführung der Aktivierungsphase (vgl. Fig. 1 und 2) bestimmt sein und dazu unverschlüsselt vorliegen. Einzelne oder alle dieser Komponenten der Software können gehärtet sein.

Es sind also beispielsweise folgende Szenarien denkbar:

1. Download einer unverschlüsselten Starter-Applikation aus einem AppStore. Diese führt die Aktivierungscode-Prozedur aus und erhält den AES Schlüssel vom SSMS und - ggf. auch von einem anderen Server - das eigentliche Kommunikationsprogramm, das mit dem AES Schlüssel verschlüsselt ist (auf dem SSMS) oder wird (auf dem elektronischen Gerät).

2. Download einer kompletten Applikation (Starter-Applikation + Kommunikationsprogramm). Der AES Schlüssel wird unter Nutzung der Starter-Applikation vom SSMS erhalten, und damit wird das Kommunikationsprogramm dann individuell verschlüsselt.

Die Software kann insbesondere als zumindest teilweise gehärtete Software ausgeführt sein, sie kann beispielsweise einen gehärteten Browser umfassen. Beispielsweise kann eine URL Whitelist (eine Liste mit URLs, auf die ausschließlich zugegriffen werden darf) enthalten sein. Es kann zusätzlich oder alternativ eine festgelegte Startseite verwendet werden.

Eine Benutzer-Zugangskontrolle findet bei jedem Start der Software statt. Es kann auch bei jedem Start eine Versionskontrolle und weitere Kontrollen, beispielsweise betreffend die Unversehrtheit der Software und/oder die Kopplung der Software an das richtige Gerät und/oder die Notwendigkeit eines Updates, durchgeführt werden.

Optional kann in Ausführungsformen der Erfindung eine Hardware-Komponente eingesetzt werden. Diese kann beispielsweise anstelle der Software/Applikation einen geheimen/privaten Schlüssel speichern oder Zugriff auf diesen ermöglichen (beispielsweise wenn dieser auf einer Smartcard gespeichert ist), allerdings beispielsweise nur bei Eingabe einer PIN. Die Hardware-Komponenten kann beispielsweise drahtgebunden (z.B. via USB) oder drahtlos (z.B. via Bluetooth) an das elektronische Gerät angebunden sein. Im Falle einer Bluetooth-Kommunikation kann diese verschlüsselt oder unverschlüsselt sein. Die Hardware-Komponente kann dabei wieder aufladbar sein, beispielsweise via USB (auch bei Anbindung über Bluetooth).

Die Hardware-Komponente kann beispielsweise eine sichere PIN-Eingabe ermöglichen, insbesondere wenn sie als Klasse-3-Lesegerät ausgebildet ist. Beispielsweise kann ein SSL-Zertifikat (z.B. das im Rahmen der Kommunikation mit dem SSMS-Server verwendete SSL-Zertifikat) auf einer zertifizierten Smartcard gespeichert sein, die mit der Hardware-Komponente lesbar ist. Die Verifizierung von Transaktions-Daten kann auf einem zusätzlichen Display (beispielsweise der Hardware-Komponente) erfolgen. Die Hardware-Komponente kann zur Implementierung einer Zwei-Faktoren-Authentisierung (Two-Factor-Authentification) verwendet werden (beispielsweise Smartcard + PIN).

Die in Ausführungsformen der Erfindung eingesetzten Härtungsverfahren sind beispielsweise spezifisch für die jeweils unterlagerte Plattform (z.B. iOS oder Android im Falle von Smartphone). Hier können beispielsweise externe (kommerzielle) Härtungsprodukte verwendet werden, beispielsweise EnsureIT von Arxan oder Netheos solution.

Es kann auch ein verhältnismäßig kleines, unverschlüsseltes Ladeprogramm verwendet werden und dann die eigentliche Software dynamisch entschlüsselt und geladen werden. Dann ist u.U. auch ein Laden aus dem Internet möglich. Das Nachladen von Programmen kann auf einigen Plattformen allerdings nicht erlaubt sein.

Konfigurationsdaten für die Software/Applikation können beispielsweise in einem persistenten Speicher gespeichert werden und damit beispielsweise vor Manipulation geschützt sein.

Code obfuscation kann zum Schutz der Software gegen Reverse Engineering eingesetzt werden.

In Ausführungsbeispielen der Erfindung kann die Erfindung zum Ersatz des etablierten mTAN-Verfahrens eingesetzt werden, indem der SMS-basierte Kommunikationskanal des mTAN-Verfahrens durch den SSL-basierten Internetkanal der vorliegenden Erfindung ersetzt wird. Dies kann als Grundlage für eine Sicherheitsmatrix dienen, anhand derer Benutzer entscheiden können, welche Sicherheitslösung für das jeweilige Anwendungsszenario ausreichend sicher ist.

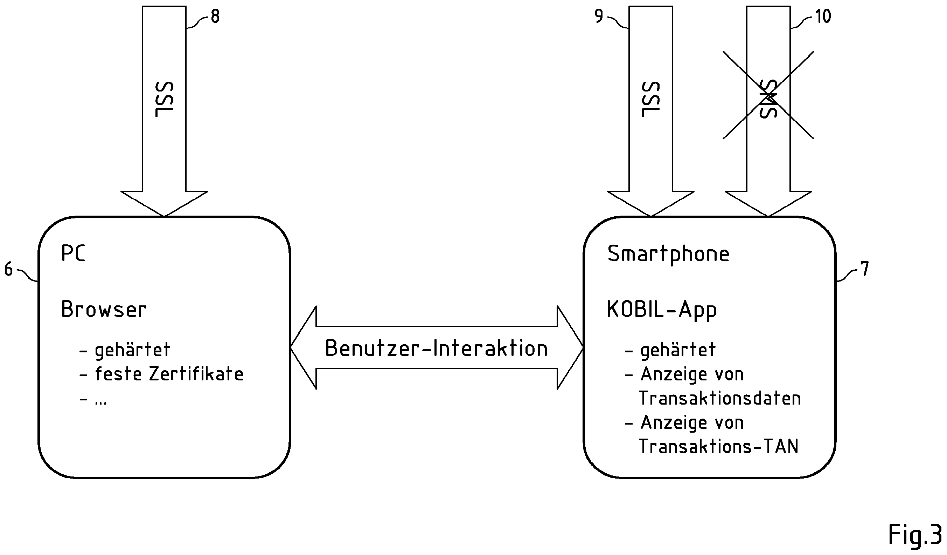

Fig. 3 zeigt ein beispielhaftes Anwendungsszenario der Erfindung. Hier interagiert ein Benutzer mit einem Personal Computer (PC) 6, auf dem ein gehärteter Browser mit festen Zertifikaten zum Internet-Banking (beispielsweise zur Authentifizierung des Banking-Servers) verwendet wird. Der gehärtete Browser kann beispielsweise auf einer CD-ROM-Partition des PCs 6 in vorkonfigurierter Form enthalten und unveränderlich sein. Dabei kommuniziert der PC 6 über eine SSL-gebundene Verbindung 8 mit einem Banking-Server (nicht dargestellt).

Der Benutzer interagiert ferner mit einem Smartphone 7, auf dem eine erfindungsgemäße Software (beispielsweise eine Applikation (App)) installiert ist. Die Applikation ist gehärtet und ist ferner zur Anzeige von Transaktionsdaten und von Transaktions-TANs eingerichtet. Sie kommuniziert über eine SSL-Verbindung 9 wie bereits zu Fig. 2 beschrieben mit dem SSMS. Die TANs können dann auf verschiedenen Wegen erhalten werden. Beispielsweise kann die TAN vom SSMS erhalten werden (über die Verbindung 9), nachdem sich der Benutzer des Smartphones 7 am SSMS authentisiert hat, den AES-Schlüssel erhalten hat und damit Daten im Smartphone 7 entschlüsselt hat (beispielsweise Teile der Software/Applikation, die zum Erhalt der TANs notwendig sind und/oder einen geheimen Schlüssel). Alternativ kann nach Authentisierung beim SSMS und Erhalt des AES-Schlüssels eine Kommunikation mit einem Banking-Server (der mit dem Banking-Server, mit dem der PC 6 kommuniziert, identisch oder von diesem verschieden sein kann) aufgenommen werden, beispielsweise beruhend auf einem Teil der Software, die erst mit dem AES-Schlüssel entschlüsselt werden konnte und/oder einem geheimen Schlüssel (z.B. zur Authentisierung gegenüber dem Banking-Server und/oder zur Verschlüsselung der Kommunikation mit demselben), der erst mit dem AES-Schlüssel entschlüsselt werden konnte.

Die so erhaltene TAN kann dann wiederum vom Benutzer am PC 6 eingegeben werden, um dort eine Online-Banking-Aktion, wie beispielsweise eine Überweisung, zu autorisieren, die mit dem gehärteten Browser eingeleitet wurde.

Das Online-Banking basiert in diesem Beispiel also auf zumindest zwei getrennten Kanälen. Zum einen dem SSL-basierten Kommunikationskanal 8 zwischen dem PC und dem Banking-Server, über den die Transaktionen eingeleitet werden, und zum anderen auf dem SSL-basierten Kommunikationskanal 9 zwischen dem Smartphone und dem SSMS. Als Bindeglied zwischen beiden Kanälen fungiert der Benutzer.

Der Kommunikationskanal zwischen dem Smartphone und dem SSMS (9) bzw. dem Banking-Server, von dem die TAN erhalten wird, ersetzt dann beispielsweise den herkömmlichen SMS-basierten mTAN-Kanal 10, der allerdings durch Trojaner auf dem Smartphone 7, die die unverschlüsselte SMS-Kommunikation 10 abhören und/oder abändern können, attackiert und kompromittiert werden kann.

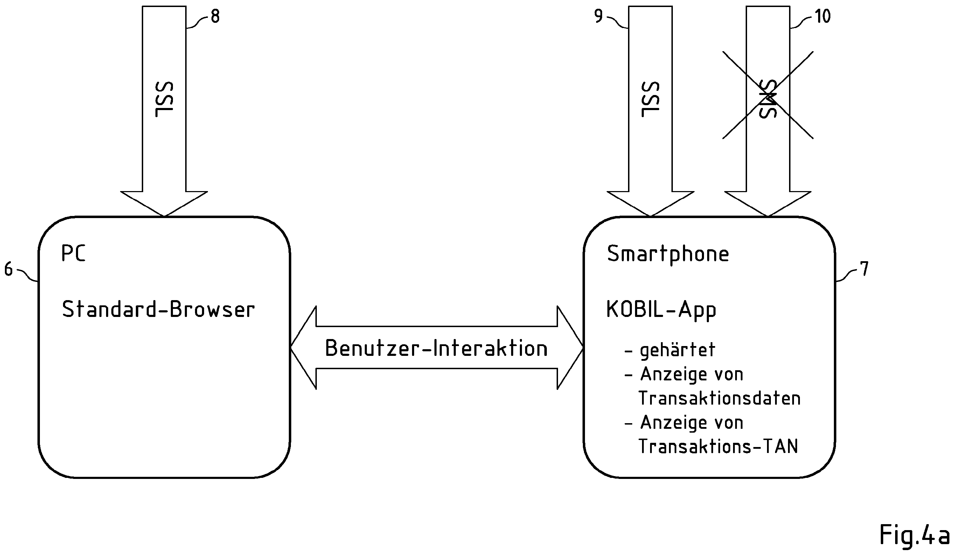

Fig. 4a zeigt ein weiteres beispielhaftes Anwendungsszenario der Erfindung, das zu dem Szenario aus Fig. 3 weitestgehend korrespondiert. Im Gegensatz zu dem Szenario aus Fig. 3 ist der PC 6' allerdings ein vom Benutzer nicht vollständig kontrollierter PC. Beispielsweise kann auf dem PC 6' lediglich ein nicht-gehärteter Browser zum Online-Banking verwendet werden. Dies kann beispielsweise der Fall sein, wenn der PC 6' in einem Internet-Cafe steht. Der Kommunikationskanal 8 des PCs mit dem Banking-Server ist dann leichter zu brechen als bei Verwendung eines gehärteten Browsers (vgl. Fig. 3). Wie im Szenario der Fig. 3 trägt aber die Einführung eines separaten Kommunikationskanals 9 zur Übermittlung der Transaktions-TANs an den Benutzer unter Verwendung der gehärteten Applikation, die mit dem SSMS kommuniziert und erst nach erfolgter Authentisierung gegenüber dem SSMS beispielsweise die Nutzung der Applikation zum Empfang der Transaktions-TANs ermöglicht, zur Erhöhung der Sicherheit bei.

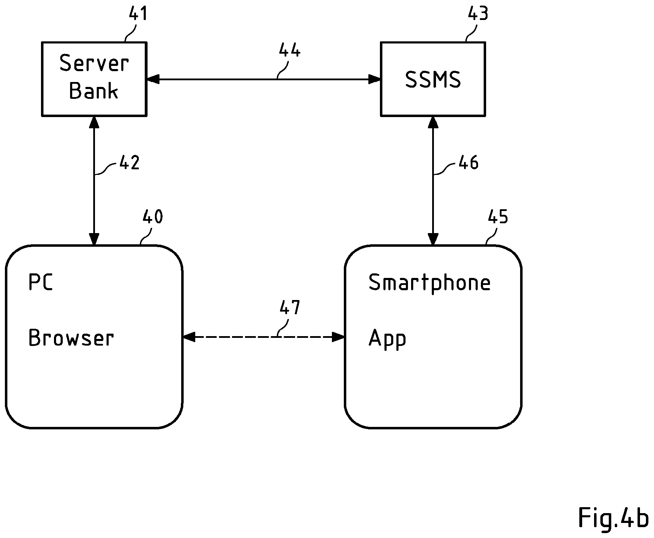

Fig. 4b zeigt ein weiteres Anwendungsszenario der vorliegenden Erfindung. Fig. 4b betrifft eine Außerband (out-of-band) - Authentisierungslösung für PC-basierten Zugang zu Online-Anwendungen. Die Authentisierungslösung kann beispielsweise zur Bestätigung/Ablehnung von Anmeldevorgängen (Logins) und/oder Transaktionen (beispielsweise Überweisungen) eingesetzt werden. Unter anderem werden hier die Schwächen und hohen Kosten von SMS-basierten Authentisierungslösungen und die Schwächen und die Fehleranfälligkeit von auf Mobilgeräten erstellten Einmalpasswörtern (soft One-Time-Passwords, OTPs) als Authentisierungslösung vermieden.

Im Szenario der Fig. 4b interagiert ein Benutzer mit einem Smartphone 45, auf dem eine erfindungsgemäße Software (beispielsweise eine Applikation (App)) installiert ist. Die Applikation ist beispielsweise gehärtet. Wie zuvor beschrieben kann die Applikation beispielsweise von einem Applikationsserver (in Fig. 4b nicht gezeigt) heruntergeladen worden sein und dann beim SSMS 43 registriert worden sein. Zugriff auf in dem Smartphone 45 gespeicherte lokale Daten, insbesondere einen geheimen Schlüssel) ist nur möglich, wenn sich der Benutzer des Smartphones 45 am SSMS 43 authentisiert hat (beispielsweise durch Eingabe einer PIN am Smartphone), daraufhin der AES-Schlüssel am Smartphone 45 erhalten wurde und die lokalen Daten zumindest teilweise (beispielsweise zumindest der geheime Schlüssel) mit dem AES-Schlüssel entschlüsselt wurden (beispielsweise durch die Applikation). Der geheime Schlüssel wird beispielsweise zur Signierung von Nachrichten verwendet, die vom Smartphone 45 an den SSMS 43 gesendet werden. Zwischen dem Smartphone 45 und dem SSMS 43 besteht bevorzugt eine gesicherte Verbindung 46, beispielsweise eine SSL-Verbindung. Zur Einrichtung dieser Verbindung 46 kann ebenfalls der geheime Schlüssel herangezogen werden. Beispielsweise wird bei der Einrichtung der Verbindung 46 Information (beispielsweise eine Challenge vom SSMS oder andere, beispielsweise sessionspezifische Information) mit dem geheimen Schlüssel am Smartphone signiert und dann am SSMS mit dem zugehörigen öffentlichen Schlüssel verifiziert.

Der Benutzer interagiert auch mit einem Browser (od. einer sonstigen Anwendung, beispielsweise einer Online-Banking-Software) auf einem PC 40 (oder einem weiteren Smartphone), der über eine Verbindung 42, beispielsweise eine SSL-Verbindung, mit dem Server einer Bank 41 verbunden ist. Beispielsweise soll über den Browser oder die Anwendung auf dem PC 40 eine Anmeldung beim Server 41 erfolgen und/oder eine Transaktion mit dem Server 41 abgewickelt werden. Der Benutzer kann nun beim Anmelden und/oder bei Transaktionen durch Außerband-Kommunikation basierend auf der Applikation auf dem Smartphone 45 authentisiert werden, wie nachfolgend beschrieben wird.

Zunächst meldet sich der Benutzer durch Eingabe seines Anmeldenamens und Passworts (oder durch alternative Authentisierungsinformation, wie beispielsweise biometrische Daten) am PC 40 beim Server 41, beispielsweise bei einem auf dem Server 41 bereitgestellten Online-Portal, das Online-Dienste ermöglicht, an.

Der Benutzer bzw. seine Anmeldung kann nun beispielsweise dadurch zusätzlich (und auf einem separaten Außerbandkanal) authentisiert werden, indem der Server 41 über die Verbindung 44, die wiederum eine gesicherte Verbindung sein kann, beim SSMS 43 eine Anmeldebestätigung einfordert. Daraufhin sendet der SSMS 43 über die gesicherte Verbindung 46 eine sichere Nachricht an die Applikation im Smartphone 45. Dem Benutzer wird daraufhin am Smartphone 45 Information betreffend seine Anmeldung beim Server 41 angezeigt, beispielsweise in folgender Form: "Wollen Sie sich wirklich bei dem Dienst X des Servers Y anmelden?". Der Benutzer kann diese Information am Smartphone 45 (beispielsweise über die Tastatur od. Spracherkennung) bestätigen oder ablehnen. Die Bestätigung oder Ablehnung des Benutzers wird dann an den SSMS 43 übertragen (beispielsweise mit dem geheimen Schlüssel signiert), der eine entsprechende Information an den Server 41 zurückgibt und damit die Anmeldung des Benutzers am Server 41 bestätigt oder nicht bestätigt.

Alternativ kann der SSMS 43 auf die Einforderung der Anmeldebestätigung durch den Server 41 einen Code, beispielsweise einen Einmalcode (beispielsweise einen kurzen Code, der beispielsweise weniger als 6, 5 od. 4 Stellen hat, um die spätere Eingabe durch den Benutzer zu erleichtern), erzeugen und über die gesicherte Verbindung 46 an die Applikation im Smartphone 45 übertragen. Am Smartphone 45 wird der Code dann dem Benutzer angezeigt. Der Benutzer gibt diesen Code dann beispielsweise über die Tastatur des PCs 40 (oder beispielsweise durch direkte Übertragung, beispielsweise optisch, akustisch od. über Funk, insbesondere über eine NFC- oder Bluetooth-Verbindung) in den PC 40 ein, der diese Information dann über die Verbindung 42 an den Server 41 überträgt. Der Server 41 überträgt den Code dann über die Verbindung 44 an den SSMS 43 zur Verifikation. Wenn der vom Server 41 erhaltene Code mit dem an das Smartphone 45 übertragenen Code übereinstimmt, wurde die Anmeldung des Benutzers am Server 41 (zusätzlich) bestätigt, und eine entsprechende Information kann vom SSMS 43 and den Server 41 ausgegeben werden. Anderenfalls war die (zusätzliche) Authentisierung des Benutzers nicht erfolgreich.

In beiden vorgenannten Verfahren zur zusätzlichen Authentisierung des Benutzers setzt die Übertragung von Nachrichten zwischen SSMS 43 und der Applikation auf dem Smartphone 45 voraus, dass sich der Benutzer des Smartphones 45 am SSMS 43 authentisiert hat (beispielsweise durch Eingabe seiner PIN am Smartphone 45) und daher der im Smartphone 45 gespeicherte geheime Schlüssel entschlüsselt und für die gesicherte Datenübertragung mit dem SSMS 43 genutzt werden kann.

In gleicher Weise wie für den Anmeldeprozess des Benutzers am Server 41 (über den PC 40) beschrieben können auch Transaktionen, die der Benutzer über den PC 40 am Server 41 vornimmt, zusätzlich über den separaten Außerbandkanal, der durch den SSMS 43 und die Applikation im Smartphone 45 gebildet wird, bestätigt werden, also beispielsweise durch Anzeige einer Information am Smartphone 45, durch die der Benutzer aufgefordert wird, eine am Server 41 über den PC 40 vorgenommene Transaktion entweder zu bestätigen oder abzulehnen, oder durch Übermittlung eines Codes vom SSMS 43 an die Applikation des Smartphones 45, der durch den Benutzer am PC 40 eingegeben oder anderweitig vom Smartphone 45 an den PC 40 übermittelt werden muss, um die Transaktion zu bestätigen. Der Code kann dabei beispielsweise die Transaktionsnummer darstellen (wie im Beispiel der Fig. 3 und 4a), oder zusätzlich zu einer Transaktionsnummer, die beispielsweise auf anderem Weg (also nicht über die Verbindung 46) an den Benutzer übermittelt wurde, erforderlich sein.

Die Anzeige von Information, die vom SSMS 43 stammt, auf einer Anzeigeeinheit des Smartphone 45 kann beispielsweise durch eine gesicherte und/oder gehärtete Anzeigesoftware, die von der Applikation auf dem Smartphone bereitgestellt oder zumindest gesteuert wird, erfolgen. Beispielsweise kann auf die Anzeigefunktionalität (beispielsweise die WebView Komponente eines Android Betriebssystems) eines Browsers zurückgegriffen werden, der (ohnehin) auf dem Smartphone 45 installiert ist.

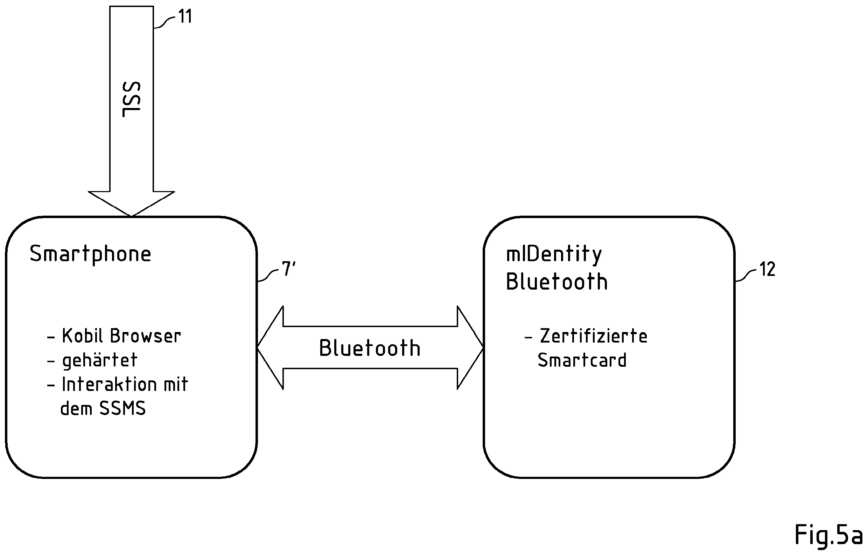

Fig. 5a zeigt ein weiteres beispielhaftes Anwendungsszenario der Erfindung. Hier wird das Smartphone 7', auf dem die erfindungsgemäße Applikation installiert ist, direkt zum Online-Banking eingesetzt (ohne einen zusätzlichen PC 6/6' wie in den Figuren 3 und 4). Dazu beinhaltet die Applikation beispielsweise einen gehärteten Browser zur Kommunikation (über die SSL-Verbindung 11) mit dem Banking-Server und ist des weiteren zur Interaktion (ebenfalls über die SSL-Verbindung 11 oder eine zusätzliche SSL-Verbindung) mit dem SSMS eingerichtet, wie im Zusammenhang mit der Fig. 2 beschrieben wurde.

In Fig. 5a ist des weiteren eine optionale Hardware-Komponente 12 zur Verwirklichung einer Zwei-Faktor-Authentisierung dargestellt, die beispielhaft über Bluetooth an das Smartphone 7' angebunden ist und auf eine zertifizierte Smartcard zugreifen kann. Die Smartcard kann beispielsweise den privaten/geheimen Schlüssel (beispielsweise anstelle des Geräts 7' bzw. der Software/Applikation) speichern (oder erzeugen) und/oder im Rahmen der Authentisierung gegenüber dem SSMS eingesetzt werden und so die Sicherheit (gegenüber der Verwendung eines Passworts) noch weiter erhöhen. Die Hardware-Komponente 12 kann zusätzlich auch ein Display zur Anzeige von Informationen (z.B. Transaktionsdaten und/oder Transaktionsnummern) umfassen.

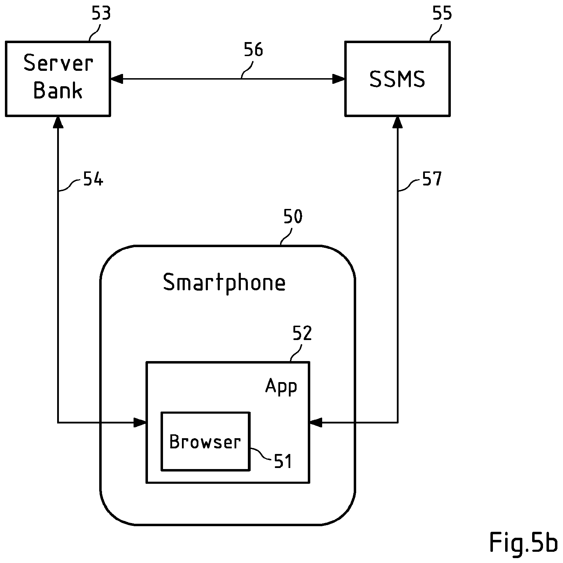

Fig. 5b zeigt ein weiteres Anwendungsszenario der vorliegenden Erfindung, das die Vertrauenswürdigkeit von auf mobilen Endgeräten ausgeführten Aktionen (wie beispielsweise Anmeldevorgängen oder Transaktionen) erhöht. Alle heutigen Angriffe gegen Browser, die auf PCs laufen, können in gleicher Weise auch gegen Browser gerichtet werden, die auf mobilen Endgeräten, insbesondere Smartphones, laufen. Beispielsweise können Nutzer durch Phising- oder Pharming-Angriffe beim Zugriff auf ihre Onlinedienste getäuscht werden, oder Man-in-the-middle-Angriffe oder Man-in-the-Browser-Angriffe können verwendet werden, um Aktionen des Benutzers während der Ausführung derselben zu verändern. Die herkömmliche Verwendung von statischen Passwörtern, SMS oder auf dem mobilen Endgerät erzeugten Einmalpasswörtern (soft OTPs) bieten hier keinen hinreichenden Schutz.

Im Ausführungsbeispiel der Fig. 5b interagiert ein Benutzer mit einem Smartphone 50, auf dem eine erfindungsgemäße Software 52 (beispielsweise eine Applikation (App)) installiert ist. Die Applikation 52 ist beispielsweise gehärtet. Wie zuvor beschrieben kann die Applikation 52 beispielsweise von einem Applikationsserver (in Fig. 5b nicht gezeigt) heruntergeladen worden sein und dann beim SSMS 55 registriert worden sein. Zugriff auf in dem Smartphone 50 gespeicherte lokale Daten, insbesondere einen geheimen Schlüssel) ist nur möglich, wenn sich der Benutzer des Smartphones 50 am SSMS 55 authentisiert hat (beispielsweise durch Eingabe einer PIN am Smartphone 50), daraufhin der AES-Schlüssel am Smartphone 50 erhalten wurde und die lokalen Daten zumindest teilweise (beispielsweise zumindest der geheime Schlüssel) mit dem AES-Schlüssel entschlüsselt wurden (beispielsweise durch die Applikation 52). Der geheime Schlüssel wird beispielsweise zur Signierung von Nachrichten verwendet, die vom Smartphone 50 an den SSMS 55 gesendet werden, und/oder zur Einrichtung einer gesicherten Verbindung 57, beispielsweise eine SSL-Verbindung, zwischen Applikation 52 und SSMS 55. Zur Einrichtung dieser Verbindung 57 kann ebenfalls der geheime Schlüssel herangezogen werden, beispielsweise zur clientseitigen Authentisierung wie oben beschrieben.

Die Applikation 52 umfasst im vorliegenden Ausführungsbeispiel einen Browser 51. Der Browser 51 kann integraler Bestandteil der Applikation 52 sein, oder kann unter Nutzung der Ressourcen eines auf dem Smartphone 50 unabhängig von derApplikation 52 installierten Browsers (beispielsweise des Standardbrowsers des Smartphones 50, der bereits bei Auslieferung auf dem Smartphone installiert ist) betrieben werden. Beispielsweise kann der Browser 51 als WebView-Komponente eines auf dem Smartphone installierten Browsers realisiert sein (beispielsweise bei einem Smartphone 50 mit Android-Betriebssystem). Alternativ kann die Applikation 52 auch keinen eigenen Browser 51 enthalten und stattdessen einen Browser des Smartphones 50 kontrollieren.

Die Applikation 52 fügt dem Smartphone 50 beispielsweise Sicherheitsmechanismen hinzu, die für den Browser 51 spezifisch sind und dessen Nutzung beispielsweise zumindest teilweise kontrollieren bzw. einschränken. Diese Sicherheitsmechanismen können beispielsweise ein oder mehrere der folgenden Eigenschaften umfassen:

- Einen URL (Uniform Ressource Locator) - Whitelist-Filter, also eine Liste von erlaubten URLs, die ein Benutzer mit dem Browser 51 aufrufen darf. Dies unterbindet den Zugriff auf falsche oder gefälschte Internetseiten.
- Einen geschützten (beispielsweise nur über die Applikation zugänglichen) Zertifikatsspeicher für Zertifikate von vertrauenswürdigen Zertifizierungsautoritäten (Certificate Authorities, CA) zur Verifizierung von Serverzertifikaten und zum Schutz von SSL-Verbindungen. Dieser kann insbesondere unabhängig vom Zertifikatsspeicher des Smartphones 50 sein.
- Eine integrierte sichere Anzeige für authentische Nachrichten (beispielsweise vom SSMS) an den Benutzer. Diese Anzeige kann beispielsweise durch Applikationsentwickler entworfen werden, beispielsweise als GUI Komponente, oder beispielsweise auch durch Nutzung der WebView-Komponente des Browsers 51 im Falle eines Android-Betriebssystems). Die Standardanzeige des Browsers 51 wird nicht zum Anzeigen von wichtigen Nachrichten (wie beispielsweise Anmeldeinformation oder Transaktionsinformationen) verwendet, sondern lediglich die sichere Anzeige. Die gesamte Anzeige der Applikation kann dann beispielsweise in einem oberen Teil die Standardanzeige des Browsers 51 und in einem darunter liegenden Teil die sichere Anzeige umfassen.

Die Applikation 52 kann beispielsweise an die Anforderungen eines Online-Diensteanbieters, auf dessen Dienste mit dem Smartphone 50 zugegriffen werden soll, angepasst werden. Anpassbare Bestandteile der Applikation 52 umfassen beispielsweise eine oder mehrere der folgenden Komponenten:

- Hintergrundbilder der graphischen Benutzeroberfläche
- Textressourcen (Beispielsweise Texte, die von der Applikation angezeigt werden. Beispielsweise können so weitere Sprachen hinzugefügt oder die Begrifflichkeiten dem Sprachgebrauch des jeweiligen Kunden angepasst werden.)
- Eine URL für die Standard-Online-Anwendung und ein URL-Whitelist-Filter
- SSL CA-Zertifikate als Vertrauensanker

Wenn ein Benutzer die Applikation 52 nutzt, wird er gebeten, sich am Smartphone 50 gegenüber dem SSMS 55 zu authentisieren (beispielsweise durch Eingabe seiner PIN). Daraufhin wird wie oben beschrieben eine Verifikation der Eingabeinformation am SSMS 55 vorgenommen und eine sichere Verbindung 57 zwischen SSMS 55 und Smartphone 50 bzw. der Applikation 52 eingerichtet.

Der Anmeldeprozess des Benutzers an Server 53 eines Dienstanbieters (in Fig. 5b beispielsweise als Bank angenommen) über eine Anwendung - vorliegend eine auf dem Browser 51 angezeigte Internetseite - zur Anmeldung am Server 53 kann dann beispielsweise damit beginnen , dass der Benutzer seinen Benutzernamen (beispielsweise eine ID) und ein beispielsweise statisches Passwort am Browser 51 eingibt (beispielsweise über die Tastatur des Smartphones 50). Diese Daten werden am Server 53 verifiziert. Daraufhin fordert der Server 53 über die Verbindung 56 beim SSMS 55 eine zusätzliche Authentisierung des Benutzers an. Der SSMS 55 sendet zu diesem Zweck über die wie oben eingerichtete gesicherte Verbindung 57 eine sichere Nachricht an die Applikation 52 auf dem Smartphone 50. Dem Benutzer wird daraufhin am Smartphone 50 (beispielsweise in der sicheren Anzeige der Applikation 52) Information betreffend seine Anmeldung beim Server 53 angezeigt, beispielsweise in folgender Form: "Wollen Sie sich wirklich bei dem Dienst X des Servers Y anmelden?". Der Benutzer kann diese Information am Smartphone 50 (beispielsweise über die Tastatur od. Spracherkennung) bestätigen oder ablehnen. Die Bestätigung oder Ablehnung des Benutzers wird dann an den SSMS 55 übertragen (beispielsweise in Form einer mit dem geheimen Schlüssel signierten Nachricht), der eine entsprechende Information an den Server 53 zurückgibt und damit die Anmeldung des Benutzers am Server 53 bestätigt oder nicht bestätigt.

Alternativ kann die Authentifizierung des Benutzers auch ohne die Eingabe von Benutzername und Passwort in die Anwendung (vorliegend beispielhaft eine am Browser 51 angezeigte Internetseite) zur Anmeldung beim Server 53 erfolgen. Dazu erzeugt der SSMS 55 (beispielsweise in Reaktion auf den Start der Applikation 52 am Smartphone 50 und die Authentisierung des Benutzers gegenüber dem SSMS 55 über die Applikation 52) einen Einmalcode (der beispielsweise aus Sicherheitsgründen verhältnismäßig lang sein kann (beispielsweise mit mehr als 8, 16 od. 32 Stellen), da er nicht vom Benutzer eingegeben werden muss) und übermittelt diesen (beispielsweise als Eintrittsticket) über die sichere Verbindung 57 an die Applikation 52. Die Applikation 52 übermittelt diesen Code an die Anwendung, die zur Anmeldung am Server 53 genutzt wird, beispielsweise automatisch. Beispielsweise wird der Code automatisch in eine am Browser 51 zur Anmeldung am Server 53 angezeigte Internetseite eingetragen. Der Code wird dann vom Server 53 über die Verbindung 56 zur Verifizierung an den SSMS 55 übermittelt, der im Falle einer Übereinstimmung zwischen dem erzeugten Code und dem vom Server 53 erhaltenen Code eine Information an den Server 53 zurückgibt, dass der Benutzer erfolgreich authentisiert wurde (und daher den Dienst des Server 53 nutzen darf). Da keine Eingabe von Benutzername und Passwort durch den Benutzer in die Anwendung / den Browser 51 mehr nötig ist, wird die Bedienerfreundlichkeit für den Benutzer gegenüber der zuvor beschriebenen Variante noch erhöht. Die Authentifizierung des Benutzers gegenüber dem Server 53 beruht hier also auf der Eingabe der PIN für den SSMS 55 durch den Benutzer (und optional der Prüfung, ob die Applikation 52 korrekt am SSMS 55 registriert und/oder unversehrt ist und/oder auf dem richtigen Smartphone 50 installiert ist).

In gleicher Weise wie für den Anmeldeprozess des Benutzers am Server 53 beschrieben können auch Transaktionen, die der Benutzer über den Browser 51 am Server 53 vornimmt, zusätzlich über den separaten Außerbandkanal, der durch den SSMS 55 und die Applikation 52 im Smartphone 50 gebildet wird, authentifiziert werden, also beispielsweise durch Anzeige einer Information am Smartphone 50, durch die der Benutzer aufgefordert wird, eine am Server 53 über den Browser 51 vorgenommene Transaktion entweder zu bestätigen oder abzulehnen, oder durch Übermittlung eines Codes vom SSMS 55 an die Applikation 52 des Smartphones 50, der dann von der Applikation 52 an die Anwendung / den Browser 51 übermittelt wird (auch hier entfällt dann vorteilhaft die händische Eingabe des Codes in die Anwendung durch den Benutzer). Der Code kann dabei beispielsweise die Transaktionsnummer darstellen (wie im Beispiel der Fig. 3 und 4a), oder zusätzlich zu einer Transaktionsnummer, die beispielsweise auf anderem Weg (also nicht über die Verbindung 57) an den Benutzer übermittelt wurde, erforderlich sein.

Das Aussehen der erfindungsgemäßen Software/Applikation (beispielsweise der Benutzerschnittstelle) kann beispielsweise mithilfe einer Konfigurationsschnittstelle (beispielsweise einer generischen Konfigurationsschnittstelle) angepasst oder verändert werden, um beispielsweise ein Branding für unterschiedliche Banken zu ermöglichen.

Alternativ kann erfindungsgemäß ein Kommunikations- und Sicherheits-SDK (Software Development-Kit) zur Erstellung der erfindungsgemäßen Software/Applikation bereitgestellt werden, wobei die Benutzerschnittstelle der Software/Applikation dann von den Nutzern des SDKs (beispielsweise Anwendungsprogrammierern für verschiedene Banken) selbst festgelegt werden kann.

Wiederum alternativ kann die Software/Applikation auch derart eingerichtet sein, dass eine das Aussehen der Benutzerschnittstelle bestimmende Maske (ein sog. "Skin") während der Aktivierungs/Initialisierungsphase (siehe Fig. 1 und 2) vom SSMS oder von einem anderen Server geladen und dann mit der Software/Applikation verknüpft wird. Wenn die Software/Applikation über einen Application-Store vertrieben wird, wäre die Software/Applikation dann in diesem Store immer unter demselben Namen erhältlich, da die bankenspezifische Anpassung erst nach erfolgtem Herunterladen während der Aktivierungs/Initialisierungsphase erfolgt.

Die Erfindung ermöglicht (beispielsweise im Gegensatz zum herkömmlichen Soft-Token-Verfahren) den Einsatz eines Zählers für falsche Authentisierungsversuche (beispielsweise falsche Passworteingaben) am SSMS (also in einer im Gegensatz zum Gerät sicheren Umgebung), so dass Brute-Force-Attacken nicht möglich sind und damit auch einfachere Passwörter verwendet werden können. Einfache Passwörter sind insbesondere auf mobilen Geräten verbreitet, da dort aufgrund der kleineren Tastaturen die Eingabe komplexer Passwörter recht aufwendig ist. Außerdem sind die lokalen Daten der Software auf dem Gerät verschlüsselt, so dass eine Schadsoftware auf dem Gerät keine geheimen Daten (unverschlüsselt) auslesen kann.

Wenn das Gerät vorübergehend entwendet und sein Inhalt kopiert wird, besteht für einen Angreifer eine weitere Hürde darin, dass ggfs. einige Hardware-Werte in der gehärteten Software verifiziert werden müssen.

Die Notwendigkeit des Einloggens beim SSMS bei jeder Aktion erlaubt u.a. eine regelmäßige Überprüfung der Version der Software und das Erzwingen von Updates. Beispielsweise kann die Durchführung des Online-Bankings unterbunden werden, wenn die Version der Software als veraltet eingestuft wird.

Wenn die erfindungsgemäße Software als Applikation ausgebildet ist, die auf einem Smartphone installiert wird und über einen Application-Store (AppStore) bezogen wird, können vorteilhaft einige Sicherheitsmechanismen der Smartphone-Anbieter ausgenützt werden, beispielsweise:

- Die Applikationen werden vor Aufnahme in die Application-Stores geprüft, beispielsweise auf Kompatibilität (z.B. bei Apple).
- Die Installation unbekannter (also nicht aus den Application-Stores stammenden) Applikationen auf den Smartphones wird unterbunden.
- Applikationen mit Schadsoftware können ferngesteuert (remote) auf den Geräten gelöscht werden.
- Die Betriebssysteme der Smartphones stellen sog. "Sandkästen" (sandboxes) bereit, und Applikationen können nicht miteinander agieren.

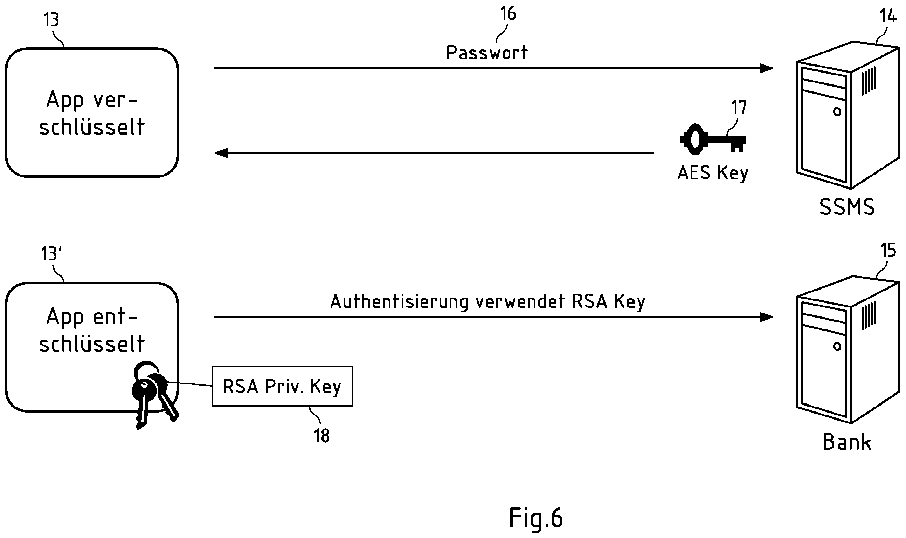

Wie zuvor geschildert kann in Ausführungsbeispielen der Erfindung ein geheimer/privater Schlüssel (im folgenden auch als "Private Key" bezeichnet) zur Authentisierung, Signierung und/oder Verschlüsselung der Kommunikation des Geräts mit einer anderen Einheit, beispielsweise einem Banking-Server, verwendet werden. Dieser Schlüssel kann an unterschiedlichen Stellen hinterlegt sein, wie nachfolgend genauer beschrieben wird. Allen Szenarien gemein ist allerdings, dass ein Zugriff auf den (gesamten) Schlüssel und damit dessen Nutzung nur nach erfolgreicher Authentisierung beim SSMS möglich ist. In der nachfolgenden Beschreibung der Fig. 6-8 wird der (gesamte) geheime Schlüssel zur Authentisierung gegenüber einem Banking-Server verwendet. Alternativ kann der geheime Schlüssel allerdings auch zur Authentisierung gegenüber dem SSMS (zum Beispiel beim Aufbau einer sicheren Verbindung, wie beispielsweise einer SSL/TLS-Verbindung oder zur Signierung von Nachrichten an den SSMS) eingesetzt werden, wie es bereits ausführlich beschrieben wurde.

Der private/geheime Schlüssel 18 kann, wie in Fig. 6 dargestellt ist, in der Software/Applikation 13' gespeichert sein. Der Schlüssel 18 wird also zusammen mit der Software 13' symmetrisch verschlüsselt, um die Software 13 zu erhalten. Ein Zugriff auf die Software 13' und auch den privaten Schlüssel 18 ist dann nur nach erfolgter Authentisierung beim SSMS 14 (über das Passwort 16) und Erhalt des AES-Schlüssels 17 (zur Entschlüsselung der Software 13) möglich. Der private/geheime Schlüssel 18 wird dann in der Kommunikation mit dem Banking-Server 15 (oder dem SSMS) eingesetzt (beispielsweise zur clientseitigen Authentisierung im Rahmen der SSL/TLS-Verbindung, wie z.B. im Kontext der Fig. 2 beschrieben wurde). Alternativ kann natürlich auch lediglich der Schlüssel 18, aber nicht die Software 13', symmetrisch verschlüsselt sein. Dann ist der Zugriff auf den Schlüssel 18 vom Erhalt des AES-Schlüssels 17 abhängig.

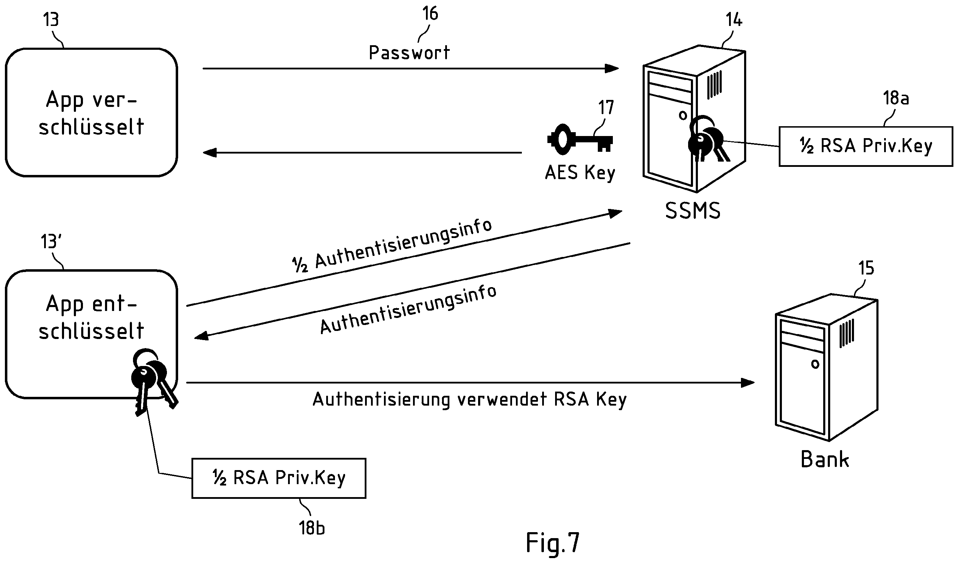

Der private/geheime Schlüssel 18a/18b kann auch, wie in Fig. 7 beispielhaft dargestellt, verteilt gespeichert sein, und zwar zum einen Teil 18a im SSMS und zum anderen Teil 18b in der Software/Applikation 13'. Sowohl SSMS 14 als auch die Software 13' müssen ihren Teil des Schlüssels 18a/18b verwenden, damit eine gültige Signatur entsteht, die mit herkömmlichen Verfahren geprüft werden kann. Das bietet Sicherheit auch bei gestohlener oder gehackter Software 13'. Der Administrator des SSMS 14 kann keinen Angriff mit dem Teilschlüssel 18a durchführen, die Software 13' bzw. der darin enthaltene Schlüssel 18b muss immer involviert (und dazu die Software 13' entschlüsselt) sein. Auch hier kann alternativ nur der Schlüsselteil 18b, aber nicht die Software 13', symmetrisch verschlüsselt sein. Dann ist der Zugriff auf den Schlüsselteil 18b vom Erhalt des AES-Schlüssels 17 abhängig und zusätzlich der Schlüsselteil 18a erforderlich.

Nachfolgend soll das Prinzip des verteilten privaten/geheimen Schlüssels 18a/18b bzw. der zugehörigen Signatur am Beispiel einer RSA-Signatur erläutert werden.

$$\text{Signatur: Text}^{\text{privKey}} = \text{Sig}$$

(Die Signatur Sig wird also aus einem Text durch Anwendung des privaten Schlüssels privKey erhalten, beispielsweise durch Verschlüsselung eines Hashwerts über den Text).

$$\text{Verifikation: Sig}^{\text{pubKey}} = \text{Text}$$

(Die Verifikation erfolgt durch Anwendung des öffentlichen Schlüssels privKey auf die erhaltene Signatur, beispielsweise durch Entschlüsselung des Hashwerts des Texts, erneute Bildung des Hashwerts über den Text und Vergleich der beiden Hashwerte).

Es gilt vereinfacht privKey = 1 / pubKey.

Damit kann die Signatur auch wie folgt berechnet werden, indem der privKey in mehrere Summanden aufgeteilt wird:

$$privKey = privKey1 + privKey2.$$

Man erhält dann:

$$\text{Signatur: Text}^{privKey} = \text{Text}^{privKey1+privKey2} = \text{Text}^{privKey1} * \text{Text}^{privKey2}$$

Das heißt, es können unabhängig zwei Signaturteile berechnet werden, die miteinander multipliziert eine RSA Signatur ergeben. Diese lässt sich dann auf herkömmliche Weise prüfen.
Die Schlüsselsummanden könnten verteilt auf SSMS 14, Software 13' und/oder einer Hardware abgelegt werden, um die Sicherheit zu erhöhen.
Wie in Fig. 7 dargestellt ist, wird also bei der Authentisierung gegenüber dem Banking-Server 15 mit zwei Authentisierungsinformationen (beispielsweise signierten Informationen) gearbeitet, von denen eine erste in der Software 13' mit dem ersten Teil des RSA-Schlüssels (privKey1) erzeugt und an den SSMS 14 weitergeleitet wird, und die zweite im SSMS 14 mit dem zweiten Teil des RSA-Schlüssels (privKey2) erzeugt und mit der ersten Authentisierungsinformation multipliziert wird, um die gesamte Authentisierungsinformation zu erhalten. Diese wird vom SSMS dann an die Software 13' zurückgesendet und kann von dieser zur Authentisierung gegenüber dem Banking-Server 15 verwendet werden, beispielsweise beim Aufbau einer SSL/TLS-Verbindung mit client- und serverseitiger Authentisierung nach RFC 5246.
Folgende Literaturhinweise zur verteilen RSA-Signatur seien beispielhaft genannt:

1) D. Boneh, M. Franklin, Efficient Generation of Shared RSA keys, Konferenzband Advances in Kryptology - Crypto 97, LNCS 1294 S. 425-439

2) J. Benaloh (Cohen), Secret sharing homomorphisms: keeping shares of a secret, Crypto 86, S.251-260

3) M. Ben-Or, S. Goldwasser, A. Widgerson Completeness theorems for non-cryptographic fault tolerant distributed computation STOC 1988, S.1-10

4) M. Malkin, Th.Wu und D. Boneh, Experimenting with Shared Generation of RSA keys, Konferenzband Internet Societys 1999 Symposium on Network and Distributed System Security (SNDSS), S. 43-56.

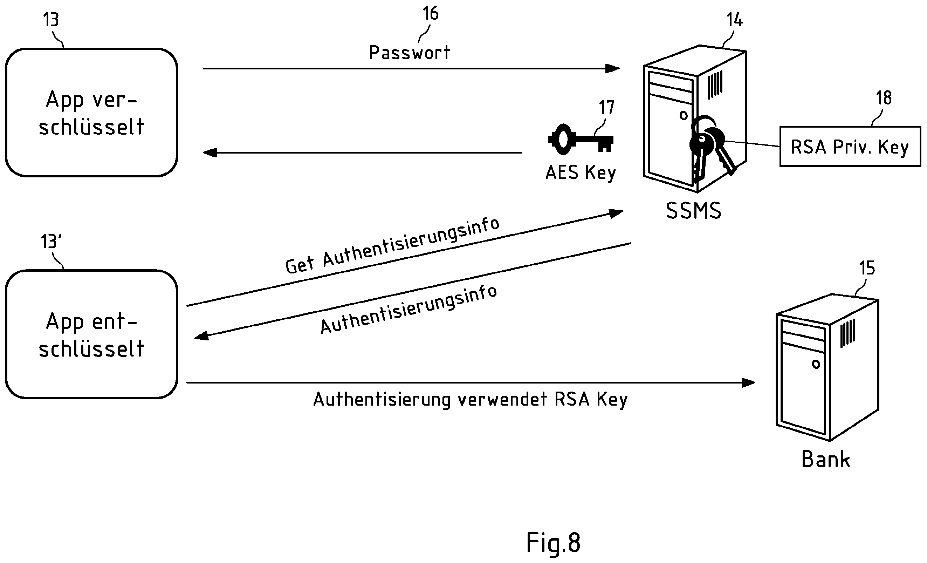

Schließlich kann der private/geheime Schlüssel 18 auch, wie in Fig. 8 dargestellt, vollständig im SSMS 14 gespeichert sein, und auch hier kann auf den Schlüssel 18 nur nach Authentisierung beim SSMS 14 und Erhalt des AES-Schlüssels 17 zugegriffen werden, beispielsweise weil eine Kommunikation mit dem SSMS und/oder ein Zugriff auf den im SSMS gespeicherten Schlüssel 18 nur mit der entschlüsselten Software 13' möglich ist. Beispielsweise kann der Schlüssel 18 mit einem (beispielsweise symmetrischen) Schlüssel verschlüsselt sein, der in der entschlüsselten Software 13' abgelegt ist. Dadurch würde auch ein (böswilliger) Zugriff eines Administrators des SSMS 14 auf den Schlüssel 18 verhindert. Der Schlüssel 18 ist also auf dem SSMS 14 gespeichert. Angriffe auf die Software 13' können ihn nicht kompromittieren.
Wie bereits oben allgemein beschrieben wurde, kann zur Erhöhung der Sicherheit eine zusätzliche Hardware-Komponente (beispielsweise die Komponente 12 aus Fig. 5), die beispielsweise über Bluetooth (oder eine andere drahtlose od. drahtgebundene Verbindung, beispielsweise über Nahfeldkommunikation (Near Field Communication, NFC) oder durch eine akustische oder optische Verbindung) an das Gerät/Smartphone angebunden ist, eingesetzt werden. Diese Hardware-Komponenten kann beispielsweise (anstelle des Geräts bzw. der Software/Applikation) den privaten/geheimen Schlüssel (beispielsweise einen RSA-Schlüssel) nicht auslesbar speichern. Der Schlüssel kann dann nur von der Hardware-Komponente verwendet werden. Die notwendigen kryptographischen Algorithmen (beispielsweise die Berechung von Signaturen) werden in der Hardware-Komponente berechnet. Es kann sich um eine SmartCard + Kartenterminal, oder um eine andere Hardware-Komponente handeln. Der geheime Schlüssel kann (beispielsweise in der Initialisierungsphase) beispielsweise im Gerät/Smartphone erzeugt und in die Hardware geschrieben worden sein, oder kann in der Hardware selbst erzeugt worden sein. Ein entsprechender öffentlicher Schlüssel kann in letzterem Fall beispielsweise aus der Hardware exportierbar sein, beispielsweise in das Gerät/Smartphone oder in den SSMS.

Die zusätzliche Hardware-Komponente erhöht die Hürde für einen Angreifer, weil er sowohl die Software/Applikation bzw. das Gerät/Smartphone, als auch die Hardware-Komponente kontrollieren muss.

Hier sind wiederum unterschiedliche mögliche Szenarien hinsichtlich der Eingabe und Speicherung der PIN, die zu der Smartcard gehört, zu unterscheiden, die nachfolgend beschrieben werden. Ohne die PIN kann beispielsweise kein Zugriff auf den privaten/geheimen Schlüssel auf der Smartcard oder in der Hardware-Komponente selbst bzw. keine Nutzung desselben möglich sein.

1. Die PIN wird in der Software/Applikation eingegeben oder ist dort gespeichert

Die PIN kann hier beispielsweise jedes Mal über die Software eingegeben und nicht gespeichert werden, oder nur einmal über die Software eingegeben und in der Software/Applikation für die Wiederverwendung gespeichert werden. Die PIN kann beispielsweise mit dem AES-Schlüssel (oder auch mit dem geheimen/privaten Schlüssel der Software, der auch verteilt vorliegen kann wie zu Fig. 7 beschrieben) verschlüsselt und im Gerät gespeichert sein, beispielsweise als Bestandteil der Software, aber alternativ auch unabhängig davon. Ohne Interaktion mit dem SSMS ist also eine Verwendung des externen Hardware-Schlüssels gar nicht möglich - etwa für den Fall, dass ein Angreifer die eigentliche Software/Applikation gar nicht selbst benutzt, sondern eine eigene Software/Applikation schreibt, die direkt auf die Hardware zuzugreifen versucht.

Wenn eine Authentisierung gegenüber einem Banking-Server oder dem SSMS erfolgen soll (wie z.B. zu Fig. 2 und 6 beschrieben wurde), kann (beispielsweise im Rahmen der clientseitigen Authentisierung) zu signierende und/oder zu verschlüsselnde Information von der Software an die Hardware-Komponente weitergereicht und dort nach Prüfung der in der Software entschlüsselten und der Hardware-Komponente angezeigten PIN signiert/verschlüsselt werden. Sind die Software/Applikation und die Hardware-Komponente gekoppelt, bietet die Hardware-Komponente keinen zusätzlichen Schutz. Der private Schlüssel kann allerdings in diesem Fall nicht ausgelesen werden.

2. Die PIN wird jedes Mal an der Hardware-Komponente eingegeben

Hier besteht ein sehr hoher Schutz für den privaten Schlüssel. Durch die erforderliche PIN-Eingabe an der Hardware-Komponente bestehen praktisch keine Angriffsmöglichkeiten. Allerdings entsteht ein gewisser Aufwand für den Benutzer, der in diesem Fall sowohl das Passwort/Access-Code für die Software/Applikation eingeben, als auch die PIN auf der Hardware-Komponente eingeben muss. Die mit dem AES-Schlüssel verschlüsselte Software auf dem Gerät kann zur Erhöhung der Sicherheit so ausgebildet sein, dass nur über die entschlüsselte Software mit der Hardware-Komponente kommuniziert oder auf diese zugegriffen werden kann, beispielsweise durch ein spezielles in der Software gespeichertes Authentisierungsmerkmal (das von der Smartcard-PIN unterschiedlich sein kann).

3. Die PIN wird vom SSMS gespeichert und über die Software/Applikation an die Hardware-Komponente gesendet.

Hier kann ein verschlüsselter Kanal zwischen Software/Applikation und SSMS und/oder ein verschlüsselter Kanal zwischen der Hardware-Komponente und dem SSMS benutzt werden. Bevorzugt sind beide Kanäle verschlüsselt.

Es handelt sich hier um ein bequemes und sicheres Verfahren, wenn die PIN von SSMS über einen sicheren Kanal an die Hardware-Komponente gesendet wird (Secure Messaging zwischen SSMS und Hardware-Komponente). Die PIN sollte bevorzugt im SSMS verschlüsselt gespeichert werden (beispielsweise beruhend auf einem (beispielsweise symmetrischen) Schlüssel, der in der Software auf dem Gerät gespeichert ist, die wiederum nur mit dem AES-Schlüssel vom SSMS entschlüsselt werden kann). Für einen Angriff müssen die PINs aus dem SSMS extrahiert und die zugehörigen Smartcards gestohlen werden.

4. Zumindest ein Teil der PIN wird von SSMS gesendet und ein Teil wird eingegeben (über die Software oder an der Hardware-Komponente).

Diese Variante bietet die höchste Sicherheit. Eine gestohlene Smartcard kann nicht ohne SSMS verwendet werden, aber auch mit den PIN-Daten aus dem SSMS hat ein Angriff nur geringe Erfolgsaussichten. Der im SSMS gespeicherte Teil der PIN kann hier wiederum mit einem (beispielsweise symmetrischen) Schlüssel verschlüsselt sein, der in der Software auf dem Gerät, die wiederum nur mit dem AES-Schlüssel vom SSMS entschlüsselt werden kann, gespeichert ist.

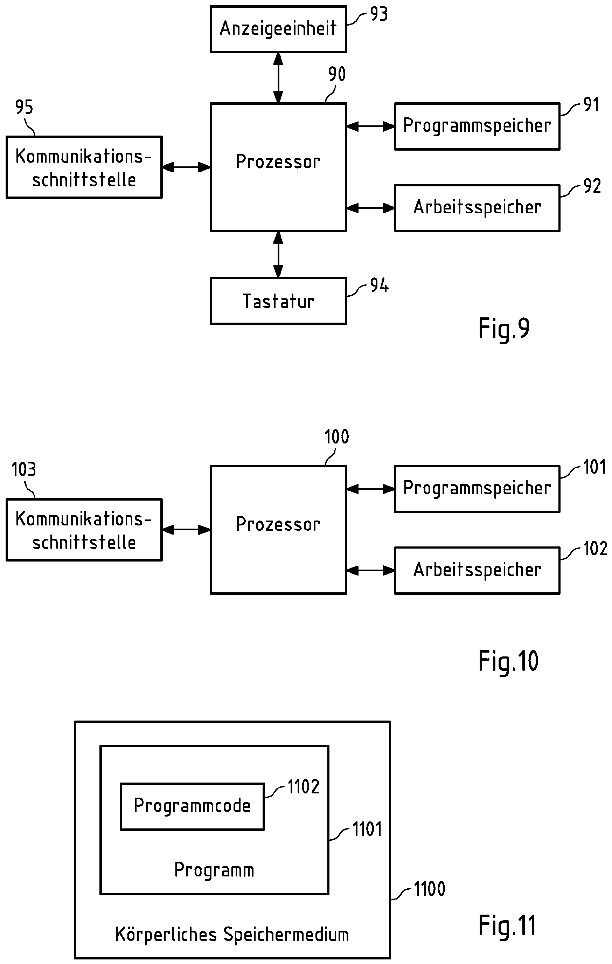

Fig. 9 ist eine schematische Darstellung der Komponenten eines Ausführungsbeispiels eines elektronischen Geräts gemäß der Erfindung. Das elektronische Gerät kann beispielsweise ein Smartphone sein, beispielsweise das Smartphone aus den Figuren 1,3,4a, 4b, 5a und 5b. Das Gerät umfasst einen Prozessor 90, der eine Anzeigeeinheit 93 (beispielsweise ein LCD-Display, beispielsweise zur Präsentation von einer oder mehreren Anzeigen umfassend eine sichere Anzeige), eine Tastatur 94 und eine Kommunikationsschnittstelle 95 steuert. Die Kommunikationsschnittstelle ermöglicht die Kommunikation des Geräts mit anderen Entitäten (beispielsweise mit dem SSMS und/oder dem Server eines Dienstanbieters und/oder einer externen Hardware wie beispielsweise einem Smartcard-Reader), beispielsweise über drahtlose oder drahtgebundene Verbindungen. Der Prozessor 90 führt ein oder mehrere Programme aus, die im Programmspeicher 91 (beispielsweise einem Flash-Speicher) gespeichert sind. Dabei kann es sich um ein Betriebssystem und weitere Programme - insbesondere die erfindungsgemäße Software - handeln. Die Software ist also beispielsweise eingerichtet zur Übermittelung von Authentisierungsinformation an den SSMS, zum Empfang des ersten Schlüssels vom SSMS, zur Entschlüsselung von auf dem elektronischen Gerät gespeicherter verschlüsselter Information mit dem ersten Schlüssel und zur Nutzung dieser entschlüsselten Information in einer Kommunikation, beispielsweise mit dem SSMS oder einem anderen Server wie bereits ausführlich beschrieben. Zur Ausführung der Programme bedient sich der Prozessor 90 des Arbeitsspeichers 92, der beispielsweise als RAM-Speicher ausgeführt sein kann. Der Zertifikatsspeicher der erfindungsgemäßen Software kann beispielsweise im Programmspeicher 91 (oder einem anderen persistenten Speicher) abgelegt sein. Der verschlüsselte geheime Schlüssel der erfindungsgemäßen Software kann beispielsweise im Programmspeicher 91 (oder einem anderen persistenten Speicher) abgelegt sein.

Fig. 10 ist eine schematische Darstellung der Komponenten eines Ausführungsbeispiels eines Servers gemäß der Erfindung. Bei dem Server kann es sich beispielsweise um den SSMS aus den Figuren 1, 2, 4b, 5b, 6, 7 und 8 handeln. Grundsätzlich kann allerdings auch der Server eines Dienstanbieters (beispielsweise einer Bank) einen derartigen Aufbau aufweisen. Der Server umfasst einen Prozessor 100, der eine Kommunikationsschnittstelle 103 steuert. Die Kommunikationsschnittstelle ermöglicht die Kommunikation des Servers mit anderen Entitäten, beispielsweise mit anderen Servern und/oder mit dem erfindungsgemäßen elektronischen Gerät, beispielsweise über eine SSL- oder TLS-Verbindung. Der Prozessor 100 führt ein oder mehrere Programme aus, die im Programmspeicher 101 (beispielsweise einem Flash-Speicher) gespeichert sind. Dabei kann es sich um ein Betriebssystem und weitere Programme - insbesondere Software zum Einrichten einer Verbindung mit dem elektronischen Gerät, zum Authentifizieren des Benutzers des elektronischen Geräts und/oder des elektronischen Geräts und zur Ausgabe eines ersten Schlüssels bei erfolgreicher Authentifizierung - handeln. Die Ausgabe des ersten Schlüssels kann dabei wie bereits beschrieben von weiteren Prüfungen betreffend die Software auf dem elektronischen Gerät abhängen, beispielsweise hinsichtlich der Integrität, der Version und/oder der Verknüpfung mit dem korrekten elektronischen Gerät der Software. Die Software kann ferner zur Kommunikation mit dem erfindungsgemäßen elektronischen Gerät eingerichtet sein, beispielsweise zum Aufbau einer sicheren Verbindung mit dem elektronischen Gerät, zur Übermittlung von Informationen zu vom einem Benutzer des elektronischen Geräts zu bestätigenden oder abzulehnenden Anmelde- und/oder Transaktionsvorgängen und zum Empfang von signierten Informationen (beispielsweise betreffend die Bestätigung/Ablehnung des Anmelde- und/oder Transaktionsvorgangs) vom elektronischen Gerät. Die Software kann ferner auch zur Kommunikation mit dem Server eines Dienstleisters eingerichtet sein, an dem ein Benutzer des elektronischen Geräts Anmelde- und/oder Transaktionsvorgänge vornimmt, beispielsweise zur Annahme von Authentisierungsanfragen von diesem Server und zur Ausgabe von Authentisierungsbestätigungen oder -ablehnungen an den Server. Zur Ausführung der Programme bedient sich der Prozessor 100 des Arbeitsspeichers 102, der beispielsweise als RAM-Speicher ausgeführt sein kann.

Fig. 11 ist eine schematische Darstellung eines Ausführungsbeispiels eines Speichermediums 1100 gemäß der Erfindung. Das Speichermedium 1100 speichert ein Programm 1101, das wiederum Programmcode 1102 beinhaltet. Das Programm kann beispielsweise die am elektronischen Gerät ausgeführte erfindungsgemäße Software sein oder die am Server ausgeführte erfindungsgemäße Software sein. Das Speichermedium 1100 kann beispielsweise den Programmspeicher 91 der Fig. 9 oder den Programmspeicher 101 der Fig. 10 darstellen. Das Speichermedium 1100 kann beispielsweise auch das erfindungsgemäße Computerprogrammentwicklungsset speichern.

Die Erfindung wurde anhand von beispielhaften Ausführungsformen beschrieben. Die Erfindung ist aber nicht auf diese konkreten Ausführungsformen eingeschränkt. Insbesondere kann die Erfindung nicht nur im Bereich des Online-Bankings eingesetzt werden, sondern beispielsweise auch in ande- ren Szenarien, in denen eine sichere Authentisierung und/oder verschlüsselte Kommunikation erforderlich ist, beispielsweise beim Fernzugriff auf Daten oder bei der Fernsteuerung von Maschinen oder Anlagen.

Beispielhafte Anwendungsbereiche der Erfindung sind:

- Im Bankensektor:

  ◦ Die Sicherung von Anmelde- und/oder Transaktionsvorgängen für Online-Banking und mobiles Banking.
  ◦ Authentisierung bei Online-Zahlungen, bei denen die Kreditkarte/Kundenkarte nicht vorliegt. Banken nutzen häufig statische PINs oder SMS OTPs für die sogenannte 3D-Authentifizierung (3D secure authentication). Diese Lösungen sind verhältnismäßig schwach, und die Benutzer haben keine Möglichkeit, die Transaktionsdetails auf sichere Art und Weise anzuzeigen und zu verifizieren. Die vorliegende Erfindung kann in die 3D-Authentifizierung integriert und Transaktionsdetails (über den SSMS) zum Benutzer zur Bestätigung gesendet werden.
  ◦ Authentisierung bei Geldabhebungen an Geldautomaten. Diese können (durch den SSMS) erlaubt werden, auch wenn keine Kundenkarte vorliegt, nämlich durch Bestätigung einer Abhebung am Geldautomaten auf mobilen Endgeräten durch den Benutzer.

- Im Online-Spielesektor: Heutzutage werden viele Spiele im Internet gespielt. Einige Spiele erfordern eine Anmeldung, wobei Benutzer sich die Passwörter teilen können. Für einige freie Spiele können Benutzer allerdings den Wunsch haben, ihre Spielprofile zu schützen und anderen nicht die Möglichkeit zu geben, sich mit entwendeten statischen Passwörtern an ihren Accounts anzumelden. Diese Anforderung kann wiederum durch die vorliegende Erfindung erfüllt werden, in dem der Anmeldevorgang eines Benutzers zusätzlich über den SSMS bestätigt wird.
- Bei Online-Webanwendungen von Unternehmen, beispielsweise CRM (Customer Relationship Management)-Systemen, ERP (Enterprise Resource Planning)-Systemen, Email-Systemen (z.B. Outlook web access). Hier kann die Anmeldung durch den Benutzer (und gfs. auch Aktionen nach dem Anmeldevorgang) durch den SSMS bestätigt werden.
- Beim VPN (Virtual Private Network) - Zugang, beispielsweise über SSL. Die SSL-Verbindung kann beispielsweise basierend auf einem Zertifikat, das erst nach Authentisierung des Benutzers am SSMS im mobilen Endgerät entschlüsselt werden kann, aufgebaut werden.
- Bei Online-Anwendungen im Gesundheitswesen, beispielsweise beim Zugriff auf elektronische Krankenakten. Auch hier kann eine zusätzliche Authentisierung eines Benutzers über den SSMS erfolgen.
- Beim Online-Glücksspiel. Auch hier ist ein Schutz sowohl von Benutzern als auch von Dienstanbietern erforderlich, der durch die zusätzliche Authentisierung durch den SSMS gewährleistet werden kann.

Die Abfolge der in dieser Spezifikation geschilderten Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Spezifikation beschriebenen beispielhaften Ausführungsformen der vorliegenden Erfindung sollen auch in allen Kombinationen miteinander offenbart sein. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist.

**Patentansprüche**

1. Verfahren, ausgeführt an einem elektronischen Gerät (3), das mit einem Server (2) kommunikativ verbunden ist, das Verfahren umfassend:

   - Authentisieren des Benutzers des elektronischen Geräts (3) und/oder des elektronischen Geräts gegenüber dem Server (2),
   - Bereitstellen eines ersten Schlüssels von dem Server (2) bei erfolgreicher Authentisierung;
   - Entschlüsseln von in dem elektronischen Gerät (3) gespeicherten verschlüsselten Daten mit dem ersten Schlüssel durch eine auf dem elektronischen Gerät (3) gespeicherte Software;
   - Durchführen einer Kommunikation des elektronischen Geräts (3) unter Verwendung der entschlüsselten Daten, oder
   - Durchführen einer Kommunikation des elektronischen Geräts (3) unter Verwendung des ersten Schlüssels zusammen mit auf dem elektronischen Gerät (3) gespeicherten Daten;

   wobei der erste Schlüssel in dem elektronischen Gerät nicht dauerhaft gespeichert ist, **dadurch gekennzeichnet, dass** das Verfahren von der auf dem elektronischen Gerät (3) gespeicherten Software ausgeführt und/oder gesteuert wird, und wobei zumindest eine Eigenschaft der Software und zumindest eine Eigenschaft des elektronischen Geräts (3) bei der Authentisierung gegenüber dem Server (2) vom Server (2) geprüft wird und nur dann der erste Schlüssel erhalten wird, wenn die Prüfung erfolgreich war; und wobei die zumindest eine Eigenschaft der Software deren Unversehrtheit gegenüber einem ursprünglichen Zustand oder einem daraus durch offizielle Updates herleitbaren Zustand darstellt.

2. Verfahren nach Anspruch 1, das Verfahren in einer Initialisierungsphase ferner umfassend:

   - Erhalten von verschlüsselten Daten, die mit dem ersten Schlüssel verschlüsselt wurden; und
   - Speichern der verschlüsselten Daten in dem elektronischen Gerät (3).

3. Verfahren nach einem der Ansprüche 1 bis 2, wobei der erste Schlüssel ein benutzerindivdueller Schlüssel ist, und wobei der erste Schlüssel von dem Server (2) während einer Initialisierungsphase erzeugbar ist.

4. Verfahren nach einem der Ansprüche 1 bis 3, wobei die entschlüsselten Daten eine Software für die Kommunikation des elektronischen Geräts (3) und/oder zumindest einen Teil eines zweiten Schlüssels zum Authentisieren des elektronischen Geräts (3) und/oder des Benutzers des elektronischen Geräts (3) und/oder zum Verschlüsseln der Kommunikation des elektronischen Geräts (3) und/oder zum Signieren von Nachrichten des elektronischen Geräts (3) umfassen.

5. Verfahren nach Anspruch 4, das Verfahren in einer Initialisierungsphase ferner umfassend:

   - Erzeugen des zweiten Schlüssels an dem elektronischen Gerät (3) .

6. Verfahren nach einem der Ansprüche 1 bis 5, wobei die Kommunikation eine Authentisierung des elektronischen Geräts (3) und/oder eine Authentisierung eines Benutzers des elektronischen Geräts (3) erfordert, und wobei die entschlüsselten Daten zumindest einen Teil von zu der von der Kommunikation erforderten Authentisierung erforderlicher Information enthalten oder für die Nutzung zumindest eines Teils dieser Information erforderlich sind.

7. Verfahren nach einem der Ansprüche 1 bis 6, wobei die entschlüsselten Daten zumindest einen Teil einer Software und/oder Information enthalten, die zum Erhalten von in dem Server (2) gespeicherter Authentisierungsinformation erforderlich ist und/oder wobei die entschlüsselten Daten zumindest einen Teil einer Software und/oder Information enthalten, die zur Nutzung von Authentisierungsinformation, auf die eine mit dem elektronischen Gerät (3) verbindbare Vorrichtung (12) zugreifen kann, erforderlich ist.

8. Verfahren nach einem der Ansprüche 1 bis 7, wobei die Kommunikation zwischen dem elektronischen Gerät und dem Server stattfindet und der Authentisierung des Benutzers bei Anmelde- und/oder Transaktionsvorgängen dient, die vom Benutzer des elektronischen Geräts mit dem elektronischen Gerät oder einem anderen Gerät an einem Server des Dienstanbieters vorgenommen werden.

9. Verfahren nach einem Ansprüche 1 bis 7, wobei die Kommunikation zwischen dem elektronischen Gerät und dem Server stattfindet und zur Übermittlung von Authentisierungsinformation, die für einen Anmelde- und/oder Transaktionsvorgang erforderlich ist, den der Benutzer des elektronischen Geräts mit dem elektronischen Gerät bei einem Server eines Dienstanbieters vornehmen möchte, vom Server an das elektronische Gerät dient.

10. Verfahren, ausgeführt an einem Server (2), der mit einem elektronischen Gerät (3) kommunikativ verbunden ist, das Verfahren umfassend:

   - Authentifizieren des Benutzers des elektronischen Geräts (3) und/oder des elektronischen Geräts (3);
   - Bereitstellen eines ersten Schlüssels zur Entschlüsselung von auf dem elektronischen Gerät (3) gespeicherten verschlüsselten Daten durch eine auf dem elektronischen Gerät (3) gespeicherte Software und die entschlüsselten Daten für eine Kommunikation des elektronischen Geräts (3) bestimmt sind, oder

   der erste Schlüssel zusammen mit auf dem elektronischen Gerät (3) gespeicherten Daten für die Kommunikation des elektronischen Geräts (3) bestimmt ist;
   wobei der erste Schlüssel nur auf dem Server (2) dauerhaft gespeichert ist,
   **dadurch gekennzeichnet, dass** das Verfahren in einer Initialisierungsphase weiter umfasst:

   - Prüfung zumindest einer Eigenschaft der auf dem elektronischen Gerät (3) gespeicherten Software und zumindest einer Eigenschaft des elektronischen Geräts (3) durch den Server (2); und
   - Ausgabe des ersten Schlüssels an das elektronische Gerät (3),

   wobei die Ausgabe nur nach erfolgreicher Prüfung erfolgt; und
   wobei die zumindest eine Eigenschaft der auf dem elektronischen Gerät (3) gespeicherten Software deren Unversehrtheit gegenüber einem ursprünglichen Zustand oder einem daraus durch offizielle Updates herleitbaren Zustand darstellt.

11. Computerprogramm, umfassend Programmanweisungen, die einen Prozessor zur Ausführung und/oder Steuerung der Schritte des Verfahrens gemäß einem der Ansprüche 1 bis 9 oder 10 veranlassen, wenn das Computerprogramm auf dem Prozessor läuft.

**12.** Computerprogrammentwicklungsset mit Computerprogrammbausteinen umfassend Programmanweisungen, die einen Prozessor zur Ausführung der Schritte des Verfahrens gemäß einem der Ansprüche 1 bis 9 oder 10 veranlassen, wenn ein aus diesen Computerprogrammbausteinen geschaffenes Computerprogramm auf dem Prozessor läuft.

**13.** Vorrichtung, umfassend Mittel zur Ausführung des Verfahrens nach einem der Ansprüche 1 bis 9 oder 10.

**Claims**

**1.** Method carried out on an electronic device (3) being communicatively connected to a server (2), the method comprising:

- authenticating the user of the electronic device (3) and/or the electronic device to the server (2),
- providing of a first key from the server (2) after successful authentication;
- decrypting encrypted data stored in the electronic device (3) with the first key by a software stored on the electronic device (3);
- performing a communication of the electronic device (3) using the decrypted data, or
- performing a communication of the electronic device (3) using the first key together with data stored on the electronic device (3);

wherein the first key is not permanently stored in the electronic device,
**characterized in that**
the method is executed and/or controlled by the software stored on the electronic device (3), and wherein at least one feature of the software and at least one feature of the electronic device (3) is checked by the server (2) during authentication to the server (2) and only the first key is obtained if the check was successful; and wherein the at least one feature of the software represents its integrity with respect to an original state or a state derivable therefrom by official updates.

**2.** Method according to claim 1, in an initialization phase the method further comprising:

- obtaining encrypted data encrypted with the first key; and
- storing of encrypted data in the electronic device (3).

**3.** Method according to one of claims 1 to 2, in which the first key is a user unique key, and wherein the first key is generatable by the server (2) during an initialization phase.

**4.** Method according to one of claims 1 to 3, in which the decrypted data comprising software for communication of the electronic device (3) and/or at least part of a second key for authenticating the electronic device (3) and/or of the user of the electronic device (3) and/or for encrypting communication of the electronic device (3) and/or for signing messages of the electronic device (3).

**5.** Method according to claim 4, in an initialization phase the method further comprising:

- generating the second key on the electronic device (3).

**6.** Method according to one of claims 1 to 5, in which the communication requires authentication of the electronic device (3) and/or authentication of a user of the electronic device (3), and in which the decrypted data contain at least some of the information required for the authentication required by the communication or are required for the use of at least some of this information.

**7.** Method according to one of claims 1 to 6, in which the decrypted data contain at least a part of a software and/or information required to obtain authentication information stored in the server (2) and/or in which the decrypted data contain at least a part of a software and/or information required to use authentication information which can be accessed by a device (12) connectable to the electronic device (3) .

8. Method according to one of claims 1 to 7, in which the communication between the electronic device and the server takes place and serves to authenticate the user in login and/or transaction operations performed by the user of the electronic device with the electronic device or another device on a server of the service provider.

9. Method according to claims 1 to 7, in which the communication between the electronic device and the server takes place and serves to transmit authentication information from the server to the electronic device, which authentication information is required for a login and/or transaction process which the user of the electronic device wishes to perform with the electronic device at a server of a service provider.

10. Method carried out on a server (2) being communicatively connected to an electronic device (3), the method comprising:

- authenticating the user of the electronic device (3) and/or the electronic device (3);
- providing a first key for decrypting encrypted data stored on said electronic device (3) by a software stored on said electronic device (3) and said decrypted data being intended for communication of said electronic device (3), or

the first key together with data stored on the electronic device (3) is intended for communication of the electronic device (3);
the first key being permanently stored only on the server (2), **characterized in that**
in an initialization phase the method further comprises:

- testing by the server (2) at least one feature of the software stored on the electronic device (3) and at least one feature of the electronic device (3); and
- outputting the first key to the electronic device (3),

where the output only takes place after a successful check;
and wherein the at least one feature of the software stored on the electronic device (3) represents its integrity with respect to an original state or a state derivable therefrom by official updates.

11. Computer program comprising program instructions which cause a processor to execute and/or control the steps of the method according to any one of claims 1 to 9 or 10 when the computer program is running on the processor.

12. Computer program development set having computer program building blocks comprising program instructions which cause a processor to execute the steps of the method according to any one of claims 1 to 9 or 10 when a computer program created from said computer program building blocks runs on said processor.

13. Device comprising means for carrying out the method according to any one of claims 1 to 9 or 10.

**Revendications**

1. Procédé, exécuté sur un appareil électronique (3), qui est en relation de communication avec un serveur (2), dans lequel le procédé comprend les opérations suivantes:

- authentifier l'utilisateur de l'appareil électronique (3) et/ou l'appareil électronique par rapport au serveur (2),
- préparer une première clé par le serveur (2) en cas d'authentification réussie;
- déverrouiller des données verrouillées mémorisées dans l'appareil électronique (3) avec la première clé au moyen d'un logiciel mémorisé sur l'appareil électronique (3);
- exécuter une communication de l'appareil électronique (3) avec utilisation des données déverrouillées, ou
- exécuter une communication de l'appareil électronique (3) avec utilisation de la première clé en même temps que des données mémorisées sur l'appareil électronique (3),

dans lequel la première clé n'est pas durablement mémorisée dans l'appareil électronique,
**caractérisé en ce que** l'on exécute et/ou on commande le procédé par le logiciel mémorisé sur l'appareil électronique (3) et dans lequel on vérifie au moyen du serveur (2) au moins une propriété du logiciel et au moins une propriété de l'appareil électronique (3) lors de l'authentification par rapport au serveur (2) et on n'obtient la première clé que lorsque la vérification a été couronnée de succès ;

et dans lequel ladite au moins une propriété du logiciel représente son intégrité par rapport à un état initial ou à un état déductible de celui-ci par des mises à jour officielles.

2. Procédé selon la revendication 1, le procédé comprenant en outre dans une phase d'initialisation les opérations suivantes:

   - obtenir des données verrouillées, qui ont été verrouillées avec la première clé; et
   - mémoriser les données verrouillées dans l'appareil électronique (3).

3. Procédé selon une des revendications 1 à 2, dans lequel la première clé est une clé individuelle d'utilisateur, et dans lequel la première clé peut être produite par le serveur (2) pendant une phase d'initialisation.

4. Procédé selon l'une quelconque des revendications 1 à 3, dans lequel les données déverrouillées comprennent un logiciel pour la communication de l'appareil électronique (3) et/ou au moins une partie d'une seconde clé pour authentifier l'appareil électronique (3) et/ou l'utilisateur de l'appareil électronique (3) et/ou pour verrouiller la communication de l'appareil électronique (3) et/ou pour signer des informations de l'appareil électronique (3).

5. Procédé selon la revendication 4, le procédé comprenant en outre dans une phase d'initialisation l'opération suivante:

   - produire la seconde clé sur l'appareil électronique (3).

6. Procédé selon l'une quelconque des revendications 1 à 5, dans lequel la communication requiert une authentification de l'appareil électronique (3) et/ou une authentification d'un utilisateur de l'appareil électronique (3), et dans lequel les données déverrouillées contiennent au moins une partie de l'information nécessaire pour l'authentification requise par la communication ou sont nécessaires pour l'utilisation d'au moins une partie de cette information.

7. Procédé selon l'une quelconque des revendications 1 à 6, dans lequel les données déverrouillées contiennent au moins une partie d'un logiciel et/ou d'une information, qui est nécessaire pour obtenir une information d'authentification mémorisée dans le serveur (2) et/ou dans lequel les données déverrouillées contiennent au moins une partie d'un logiciel et/ou d'une information qui est nécessaire pour l'utilisation de l'information d'authentification, à laquelle peut accéder un dispositif (12) pouvant être connecté à l'appareil électronique (3).

8. Procédé selon l'une quelconque des revendications 1 à 6, dans lequel la communication s'établit entre l'appareil électronique et le serveur et sert pour l'authentification de l'utilisateur lors d'opérations de connexion et/ou de transaction, qui sont effectuées par l'utilisateur de l'appareil électronique avec l'appareil électronique ou avec un autre appareil sur un serveur du fournisseur de services.

9. Procédé selon l'une quelconque des revendications 1 à 7, dans lequel la communication s'établit entre l'appareil électronique et le serveur et sert pour la transmission d'informations d'authentification, qui sont nécessaires pour une opération de connexion et/ou de transaction, que l'utilisateur de l'appareil électronique voudrait exécuter avec l'appareil électronique auprès d'un serveur d'un fournisseur de services.

10. Procédé, exécuté sur un serveur (2), qui est en relation de communication avec un appareil électronique (3), dans lequel le procédé comprend les opérations suivantes:

    - authentifier l'utilisateur de l'appareil électronique (3) et/ou l'appareil électronique (3);
    - préparer une première clé pour le déverrouillage de données verrouillées mémorisées sur l'appareil électronique (3) au moyen d'un logiciel mémorisé sur l'appareil électronique (3) et les données déverrouillées sont destinées à une communication de l'appareil électronique (3), ou la première clé est destinée en même temps que des données mémorisées sur l'appareil électronique (3) à la communication de l'appareil électronique (3);

    dans lequel la première clé n'est durablement mémorisée que sur le serveur (2),
    **caractérisé en ce que** le procédé comprend en outre dans une phase d'initialisation les opérations suivantes:

    - vérification d'au moins une propriété du logiciel mémorisé sur l'appareil électronique (3) et d'au moins une propriété de l'appareil électronique (3) par le serveur (2); et
    - production de la première clé sur l'appareil électronique (3) ,

dans lequel la production n'a lieu qu'après une vérification réussie ;
et dans lequel ladite au moins une propriété du logiciel mémorisé sur l'appareil électronique (3) représente son intégrité par rapport à un état initial ou à un état déductible de celui-ci par des mises à jour officielles.

11. Programme informatique, comprenant des instructions de programme, qui conduisent un processeur à exécuter et/ou à commander les opérations du procédé selon l'une quelconque des revendications 1 à 9 ou 10, lorsque le programme informatique est exécuté sur le processeur.

12. Ensemble de développement de programme informatique avec des composants de programme informatique comprenant des instructions de programme, qui conduisent un processeur à exécuter les opérations du procédé selon l'une quelconque des revendications 1 à 9 ou 10, lorsqu'un programme informatique développé à partir de ces composants de programme informatique est exécuté sur le processeur.

13. Dispositif, comprenant des moyens pour exécuter le procédé selon l'une quelconque des revendications 1 à 9 ou 10.

Fig.1

```
Applikation                                                                   SSMS

Bekannt:                    ================ Personalisierung ==========  Bekannt:
Öffentlicher Schlüssel KOBIL   <------- Benutzer + Aktivierungscode ---->| Geheimer Schlüssel Kobil
Installation der App ----->    |                                         |
                               |                                         |
Erster Start --------->        |                                         |
- Einrichtung SSL-Verbindung   |                                         |
   (nur serverseitige Authentisierung) | <--------------- SSL ----------------> |
-Eingabe Benutzer+Aktivierungscode | Benutzer, Aktivierungscode --->       | - Validierung Aktivierungscode
-Setzen eines Passworts        | Passwort --->                            | - Speichern Benutzer-Passwort
-Speichern Benutzer-ID (vom SSMS erz.)| <--- vom SSMS erzeugte Benutzer-ID | - Erzeuge Benutzer-ID
-Erzeuge Schlüsselpaar         | Öffentlicher Schlüssel --->              | - Signiere öffentl. Schlüssel und
-Speichere sign. öffentl. Schlüssel | <--- sign. öffentl. Schlüssel       |   leite an Banking-Server weiter
-Verschlüssele geheimen Schlüssel | <--- AES-Schlüssel                    | - Erzeuge AES-Schlüssel
 mit AES-Schlüssel              |                                         |
-Lösche geheimen Schlüssel im RAM  |                                     |
                                 .                                       .
                                 .                                       .
Bekannt:                      .============== Normale Nutzung==========. Bekannt:
Öffentlicher Schlüssel KOBIL  .                                        . AES-Schlüssel
Passwort                      |                                        | Passwort
Verschlüsselter geheimer Schlüssel |                                   | Benutzer-ID
                              |                                         |
                              |                                         |
- Einrichtung SSL-Verbindung  |                                         |
   (nur serverseitige Authentisierung) | <--------------- SSL ----------------> |
- Eingabe Passwort            | Benutzer-ID, Passwort --->               | - Validiere Passwort
- Entschlüssele geheimen Schlüssel |  <--- AES-Schlüssel                  |
 mit AES-Schlüssel            |                                         |

                              |<--Zertifikat Banking-Server, Whitelist,.. |
                                 .                                       .
                                 .                                       .
                                 .                                       .
                                 .                                       .
Applikation                                                             Banking-Server
                              |                                         | - öffentl. Benutzerzertifikat
- Einrichtung SSL mit Banking-Server |                                  |
   (Client- und Server-Authentisierung) | <--------------- SSL ----------------> |
                              | <--- Durchführung Banking--->            |
- Lösche alle Daten im RAM    |                                         |
                              |                                         |
```

Fig.2

EP 2 533 172 B2

**PC**

**Browser**

- gehärtet
- feste Zertifikate
- ...

Benutzer-Interaktion

**Smartphone**

**KOBIL-App**

- gehärtet
- Anzeige von Transaktionsdaten
- Anzeige von Transaktions-TAN

SSL

SSL

SMS

6

8

9

10

7

Fig.3

| | |
|---|---|
| **PC** | **Smartphone** |
| Standard-Browser | KOBIL-App |
| | - gehärtet |
| | - Anzeige von Transaktionsdaten |
| | - Anzeige von Transaktions-TAN |

SSL 8

SSL 9

SMS 10

6

7

Benutzer-Interaktion

Fig.4a

Fig.4b

Fig.5a

mIDentity
Bluetooth

- Zertifizierte
  Smartcard

Bluetooth

SSL

Smartphone

- Kobil Browser
- gehärtet
- Interaktion mit
  dem SSMS

Fig.5b

Fig.6

EP 2 533 172 B2

Fig.7

RSA Priv. Key

SSMS

Bank

AES Key

Passwort

Get Authentisierungsinfo

Authentisierungsinfo

Authentisierung verwendet RSA Key

App ver-schlüsselt

App ent-schlüsselt

Fig.8

Fig.9

Fig.10

Fig.11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004070587 A1
- WO 0106699 A2
- US 2009300356 A1
- US 2007297610 A1

**In der Beschreibung aufgeführte Nicht-Patentliteratur**

- **D. BONEH ; M. FRANKLIN.** Efficient Generation of Shared RSA keys, Konferenzband Advances in Kryptology - Crypto 97. LNCS, vol. 1294, 425-439
- **J. BENALOH (COHEN.** Secret sharing homomorphisms: keeping shares of a secret. *Crypto,* vol. 86, 251-260
- **M. BEN-OR ; S. GOLDWASSER ; A. WIDGERSON.** Completeness theorems for non-cryptographic fault tolerant distributed computation. *STOC,* 1988, 1-10
- **M. MALKIN ; TH.WU ; D. BONEH.** Experimenting with Shared Generation of RSA keys. *Konferenzband Internet Societys 1999 Symposium on Network and Distributed System Security (SNDSS),* 43-56